# EUROPEAN PATENT APPLICATION

(11) **EP 4 610 235 A1**
(43) Date of publication of application: **03.09.2025**
(21) Application number: 23882551.7
(22) Date of filing: 20.10.2023
(51) Int. Cl.: C02F 1/461

(54) **WATER TREATMENT DEVICE AND OPERATION METHOD FOR SAME**

(30) Priority: 26.10.2022 JP 2022171424
(71) Applicant: Panasonic Intellectual Property Management Co., Ltd., Kadoma-shi, Osaka 571-0057 (JP)
(72) Inventor: UEYA, Noriyoshi, Kadoma-shi, Osaka 571-0057 (JP); KODA, Ryo, Kadoma-shi, Osaka 571-0057 (JP); KITAZAWA, Yosuke, Kadoma-shi, Osaka 571-0057 (JP)
(74) Representative: Appelt, Christian W.
(86) International application number: PCT/JP2023/037992
(87) International publication number: WO 2024/090346

(57) **Abstract**

A method according to the present disclosure is an operation for a water treatment device provided with an electrolysis device that generates alkaline water and acidic water by electrolysis and has electrodes with switchable polarities, a first circulation flow path and a second circulation flow path that are circulation flow paths connected to the electrolysis device and through which alkaline water and acidic water generated by the electrolysis device can alternately pass, a water storage tank that stores treated water generated by the electrolysis device, and a control device, the control device executing at least two electrolysis steps and a polarity switching step for switching the polarity of the electrodes of the electrolysis device between consecutive electrolysis steps, and the control device performs control, in the polarity switching step, to cause the acidic water or the treated water generated by the electrolysis device to pass through the electrolysis device.

## Description

### TECHNICAL FIELD

The present disclosure relates to a water treatment device.

### BACKGROUND ART

For example, Patent Document 1 discloses a water treatment device that purifies water by using electrolysis. In the water treatment device disclosed in Patent Document 1, Mg²⁺ ions dissolved from the anode and OH⁻ ions generated by electrolysis of water at the cathode are bonded together to form colloidal particles. The contamination components are aggregated in the colloidal particles, and the water is purified by filtering the aggregated dirt components.

### PRIOR ART DOCUMENT

### PATENT DOCUMENT

Patent Document 1: JP-A-2003-80261

### SUMMARY OF THE INVENTION

### PROBLEMS TO BE SOLVED BY THE INVENTION

In a water treatment device using electrolysis, suppression of the consumption of electrodes used for electrolysis is required.

Therefore, an object of the present disclosure is to solve the above problem, and to provide a water treatment device that can suppress consumption of electrodes and an operation method for the same.

### SOLUTION TO THE PROBLEMS

A method according to one aspect of the present disclosure is an operation method for a water treatment device including: an electrolysis device that generates alkaline water and acidic water by electrolysis and has an electrode whose polarity can be switched; a first circulation flow path and a second circulation flow path that are connected to the electrolysis device and are capable of alternately passing the alkaline water and the acidic water generated by the electrolysis device through; a water storage tank that stores treated water generated by the electrolysis device; and a control device, in which the control device executes at least two electrolysis steps and a polarity switching step of switching the polarity of the electrode of the electrolysis device between the electrolysis steps executed consecutively, the electrolysis step includes the steps of: supplying raw water to the electrolysis device; generating alkaline water and acidic water by electrolysis of raw water and causing the alkaline water and the acidic water to pass through the first circulation flow path or the second circulation flow path; and delivering the alkaline water and the acidic water that are generated to the water storage tank and storing the alkaline water and the acidic water as treated water, and the control device performs control, in the polarity switching step, to cause the acidic water or the treated water generated by the electrolysis device to pass through the electrolysis device.

A water treatment device according to one aspect of the present disclosure includes: an electrolysis device that generates alkaline water and acidic water by electrolysis and has an electrode whose polarity can be switched; a first circulation flow path and a second circulation flow path that are circulation paths connected to the electrolysis device and are capable of alternately passing the alkaline water and the acidic water generated by the electrolysis device through; a water storage tank that stores the alkaline water and the acidic water generated by the electrolysis device as treated water; and a control device, in which the control device executes at least two electrolysis steps and a polarity switching step of switching the polarity of the electrode of the electrolysis device between the electrolysis steps executed consecutively, and the control device performs control, in the polarity switching step, to cause the acidic water or the treated water generated by the electrolysis device to pass through the electrolysis device.

### EFFECTS OF THE INVENTION

According to the water treatment device and the operation method for the same of the present disclosure, the consumption of the electrodes can be suppressed.

### BRIEF DESCRIPTION OF THE DRAWINGS

[Fig. 1A] Fig. 1A is a schematic diagram of a water treatment device according to a first embodiment.
[Fig. 1B] Fig. 1B is a schematic view of the electrodes.
[Fig. 2] Fig. 2 is a flowchart of an operation method for the water treatment device.
[Fig. 3] Fig. 3 is a flowchart for the water treatment device executing a first mode.
[Fig. 4] Fig. 4 is a diagram illustrating a flow of water in a first raw water filling mode in the first mode.
[Fig. 5] Fig. 5 is a diagram illustrating a flow of water in a first crystallization treatment mode in the first mode.
[Fig. 6] Fig. 6 is a diagram illustrating a flow of water in a first alkaline water delivery mode in the first mode.
[Fig. 7] Fig. 7 is a diagram illustrating a flow of water in a first acidic water delivery mode in the first mode.
[Fig. 8] Fig. 8 is a diagram illustrating a flow of water in a first pipe cleaning mode in the first mode.
[Fig. 9] Fig. 9 is a flowchart for the water treatment device executing a first polarity switching step.
[Fig. 10A] Fig. 10A is a diagram illustrating a flow of water in a first acidic water passing mode in the first polarity switching step.
[Fig. 10B] Fig. 10B is a diagram illustrating a flow of water in a first acidic water draining mode in the first polarity switching step.
[Fig. 10C] Fig. 10C is a diagram illustrating a flow of water in the first acidic water draining mode in the first polarity switching step.
[Fig. 11] Fig. 11 is a flowchart for the water treatment device executing a second mode.
[Fig. 12] Fig. 12 is a diagram illustrating a flow of water in a second raw water filling mode in the second mode.
[Fig. 13] Fig. 13 is a diagram illustrating a flow of water in a second crystallization treatment mode in the second mode.
[Fig. 14] Fig. 14 is a diagram illustrating a flow of water in a second alkaline water delivery mode in the second mode.
[Fig. 15] Fig. 15 is a diagram illustrating a flow of water in a second acidic water delivery mode in the second mode.
[Fig. 16] Fig. 16 is a diagram illustrating a flow of water in a second pipe cleaning mode in the second mode.
[Fig. 17] Fig. 17 is a flowchart for the water treatment device executing a second polarity switching step.
[Fig. 18] Fig. 18 is a diagram illustrating a flow of water in a second acidic water passing mode in the second polarity switching step.
[Fig. 19] Fig. 19 is a schematic diagram of a water treatment device according to a second embodiment.
[Fig. 20] Fig. 20 is a flowchart of an operation method for the water treatment device.
[Fig. 21] Fig. 21 is a flowchart for the water treatment device executing a first polarity switching step.
[Fig. 22] Fig. 22 is a diagram illustrating a flow of water in a treated water delivery mode in the first polarity switching step.
[Fig. 23] Fig. 23 is a diagram illustrating a flow of water in a treated water passing mode in the first polarity switching step.
[Fig. 24] Fig. 24 is a flowchart for the water treatment device executing a second polarity switching step.
[Fig. 25] Fig. 25 is a diagram illustrating a flow of water in the treated water delivery mode in the second polarity switching step.
[Fig. 26] Fig. 26 is a diagram illustrating a flow of water in the treated water passing mode in the second polarity switching step.

### DETAILED DESCRIPTION

Hereinafter, embodiments according to the present disclosure will be described in detail with reference to the drawings. Note that the present disclosure is not limited by the embodiments.

### (First Embodiment)

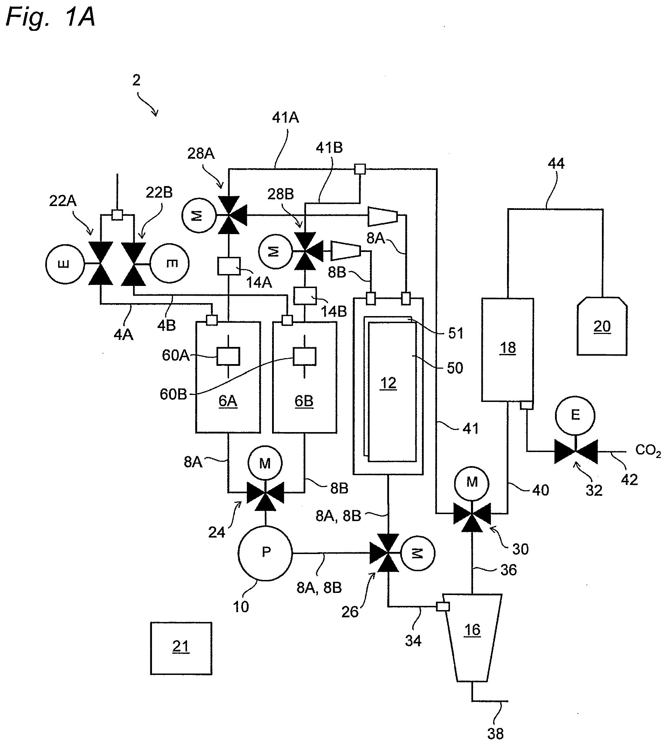

In the first embodiment, a water softening device that generates soft water from hard water will be described as an example of a water treatment device 2 according to the present disclosure. Fig. 1A is a schematic diagram of the water treatment device 2 according to a first embodiment.

The water treatment device 2 is a device for removing metal ions, which act as hardness components, from water by using electrolysis. The metal ions here are calcium ions (Ca²⁺) and magnesium ions (Mg²⁺). The water treatment device 2 according to the first embodiment is a water softening device for producing soft water by removing and separating metal ions from hard water to reduce the concentration (hardness) of metal ions in hard water to a predetermined concentration or less. As the definition of hard water and soft water, for example, the definition described by World Health Organization may be used. That is, a hardness of less than 120 mg/L may be defined as the soft water, and a hardness of 120 mg/L or more may be defined as the hard water.

The water treatment device 2 illustrated in Fig. 1A includes raw water flow paths 4A, 4B, batch treatment tanks 6A, 6B, circulation flow paths 8A, 8B, a pump 10, an electrolysis device 12, pH sensors 14A, 14B, a separation device 16, an intermediate tank 18, a water storage tank 20, and a control device 21. The water treatment device 2 further includes valves 22A, 22B, a valve 24, a valve 26, valves 28A, 28B, a valve 30, and a valve 32 as various valves.

The raw water flow paths 4A, 4B are flow paths for supplying raw water to a corresponding batch treatment tank 6A, 6B. For example, the raw water is hard water. The upstream sides of the raw water flow paths 4A, 4B are connected to a water source (not illustrated), and the downstream sides thereof are connected to the batch treatment tanks 6A, 6B. The valves 22A, 22B are each provided in a corresponding raw water flow path 4A, 4B. Through the opening and closing of the valves 22A, 22B, passing or stopping of water from the raw water flow paths 4A, 4B to the batch treatment tanks 6A, 6B are respectively controlled. The valves 22A, 22B may be solenoid valves.

The batch treatment tanks 6A, 6B are each a water storage tank for performing batch treatment. The batch treatment tanks 6A, 6B are each provided with a float sensor 60A, 60B, which can detect the amount of water stored. The batch treatment tanks 6A, 6B are each connected with a circulation flow path 8A, 8B.

The circulation flow paths 8A, 8B are two circulation flow paths connected to the batch treatment tanks 6A, 6B. The circulation flow paths 8A, 8B each extend downstream from a batch treatment tank 6A, 6B, and merge together at a position connected to the valve 24 to form one flow path. The circulation flow paths 8A, 8B as one flow path are connected to the electrolysis device 12 via the pump 10 and the valve 26.

Through the opening and closing of the valve 24 and the valve 26, passing or stopping of water from the batch treatment tanks 6A, 6B to the electrolysis device 12 are controlled. The valve 24 and the valve 26 may be valves that are opened and closed by motor drive. By driving of the pump 10 provided between the valve 24 and the valve 26, water is passed from the batch treatment tanks 6A, 6B downstream.

The electrolysis device 12 is a device that generates alkaline water and acidic water by electrolyzing the water supplied through the circulation flow paths 8A, 8B. The electrolysis device 12 includes two electrodes 50, 51 and a diaphragm (not illustrated) provided between the two electrodes 50, 51. By applying a voltage between the two electrodes 50, 51, the water is electrolyzed to generate the alkaline water and the acidic water. The polarity of the electrodes 50, 51 can be switched between a positive electrode (anode) and a negative electrode (cathode). When the electrode 50 is a positive electrode, the electrode 51 is a negative electrode, and when the electrode 50 is a negative electrode, the electrode 51 is a positive electrode. In the first embodiment, the electrolysis device 12 has a multipolar configuration including a plurality of electrodes 50 and a plurality of electrodes 51.

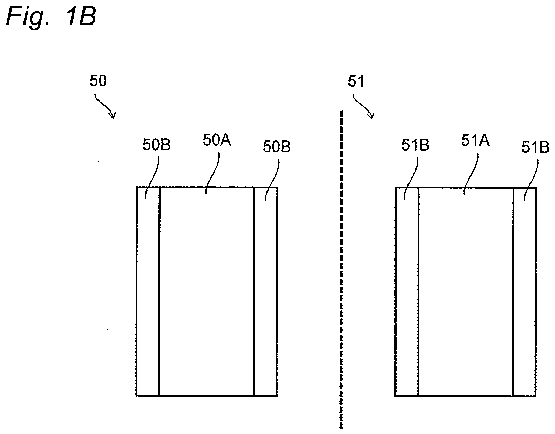

Fig. 1B is a schematic view of the electrodes 50, 51. As illustrated in Fig. 1B, the electrodes 50, 51 each have a main body 50A, 51A, and a catalyst layer 50B, 51B coated on the main body 50A, 51A. The main bodies 50A, 51A are, for example, plate-like members made of titanium (Ti) having a thickness of 0.5 mm. The catalyst layers 50B, 51B are formed of, for example, a noble metal such as platinum (Pt) having a thickness of 0.2 µm. As the electrolysis proceeds, the catalyst layers 50B, 51B are eluted in water and consumed.

On the downstream side of the electrolysis device 12, the circulation flow paths 8A, 8B are connected as two flow paths.

Each of the circulation flow paths 8A, 8B connected to the downstream side from the electrolysis device 12 can alternately pass the alkaline water and the acidic water generated by the electrolysis device 12. At the time when the circulation flow path 8A causes the alkaline water to pass therethrough, the circulation flow path 8B causes the acidic water to pass therethrough, and at the time when the circulation flow path 8A causes the acidic water to pass therethrough, the circulation flow path 8B causes the alkaline water to pass therethrough.

The circulation flow path 8A connected to the downstream side from the electrolysis device 12 is provided with the valve 28A and the pH sensor 14A in the middle thereof, and is extended and connected to the batch treatment tank 6A. Similarly, the circulation flow path 8B connected to the downstream side from the electrolysis device 12 is provided with the valve 28B and the pH sensor 14B in the middle thereof, and is extended and connected to the batch treatment tank 6B. Through the opening and closing of the valves 28A, 28B, passing or stopping of water from the electrolysis device 12 to the batch treatment tanks 6A, 6B are respectively controlled. The valves 28A, 28B may be valves that are opened and closed by motor drive.

The circulation flow paths 8A, 8B having the above-described configuration constitute circulation flow paths each flowing from the corresponding batch treatment tank 6A, 6B and returning to the corresponding batch treatment tank 6A, 6B via the electrolysis device 12. The circulation flow paths 8A, 8B of the first embodiment merge together at a position between the valve 24 and the electrolysis device 12 to form one flow path. Compared with the case where the circulation flow paths 8A, 8B are independent flow paths that do not merge together, the device configuration of the water treatment device 2 can be simplified in that only one pump 10 is required, and the like.

The pH sensors 14A, 14B are each a sensor for detecting a pH value as a parameter of the water flowing through the circulation flow paths 8A, 8B.

In addition to the circulation flow paths 8A, 8B, a flow path 34 is connected to the valve 26 provided at the position where the circulation flow paths 8A, 8B merge together to form one flow path. The flow path 34 is connected to the separation device 16.

The separation device 16 is a device that separates crystals of a metal component from the water supplied from the flow path 34. The separation device 16 of the first embodiment is a cyclone-type separation device that separates solids such as crystals contained in water by centrifugal separation.

A flow path 36 and a flow path 38 are connected as two flow paths to the separation device 16. The flow path 36 is a flow path through which water from which crystals are separated by the separation device 16 passes. The flow path 38 is a drain flow path through which waste water containing crystals separated by the separation device 16 passes, and extends outside the system of the water treatment device 2.

The flow path 36 through which the water obtained by separating crystals passes is connected to the valve 30. A flow path 40 and a flow path 41 are connected to the valve 30.

The flow path 40 is a flow path connected to the intermediate tank 18. The intermediate tank 18 is a tank for temporarily storing water passing through the flow path 40. Through the opening and closing of the valve 30, passing and stopping of water from the separation device 16 to the intermediate tank 18 via the flow paths 36, 40 are controlled. The valve 30 may be a valve that is opened and closed by motor drive.

The flow path 41 is a bypass flow path for connecting the batch treatment tanks 6A, 6B and the separation device 16 without passing through the electrolysis device 12. Two flow paths 41A, 41B are connected to the flow path 41, and the flow paths 41A, 41B are each connected to a corresponding valve 28A, 28B described above.

A CO₂ supply line 42 is connected to the intermediate tank 18. The CO₂ supply line 42 is a pipe for supplying CO₂ gas to the water stored in the intermediate tank 18. By supplying CO₂ gas through the CO₂ supply line 42, the turbidity of water stored in the intermediate tank 18 can be reduced. A valve 32 is provided in the middle of the CO₂ supply line 42, and supply/stop of CO₂ gas is controlled by opening and closing of the valve 32. The valve 32 may be a solenoid valve.

Furthermore, a flow path 44 is connected to the intermediate tank 18. The flow path 44 is connected to the water storage tank 20.

The water storage tank 20 is a tank for storing treated water for which the water softening treatment has been completed. The treated water stored in the water storage tank 20, that is, soft water can be supplied to a water faucet or the like to be used by the end user.

The water storage tank 20 is provided with a pressure sensor (not illustrated). The amount of water stored in the water storage tank 20 can be detected by detecting, by the pressure sensor, a decrease in pressure due to consumption of the treated water.

The control device 21 is a member that controls each component of the water treatment device 2 described above. The control device 21 is electrically connected to each component of the water treatment device 2, and executes opening/closing control of each valve, ON/OFF control of the pump 10, ON/OFF control of the electrolysis device 12, ON/OFF control of the separation device 16, and the like. The control device 21 includes, for example, a microcomputer including a processor and a memory storing a computer program executed by the processor.

Here, the elution of the catalyst layers 50B, 51B of the electrodes 50, 51 will be described in more detail. In a case where the catalyst layers 50B, 51B of the electrodes 50, 51 are platinum (Pt), the catalyst layers 50B, 51B are eluted according to the following Formula 1.

(Formula 1) Pt + 4Cl⁻ + 4H⁺ → H₄ (PtCl₄)

As shown in Formula 1, the elution of Pt is promoted in an environment with a large amount of Cl⁻ ions. On the other hand, the elution of Pt is suppressed in an environment with a small amount of Cl⁻ ions. In addition, it is known that the elution of Pt at the time of switching the polarities of the electrodes 50, 51 is promoted more than the elution of Pt at the time of performing electrolysis using a constant current. This is considered to be because when Pt in the reduction state is rapidly shifted to the oxidation state, the elution of Pt occurs more easily.

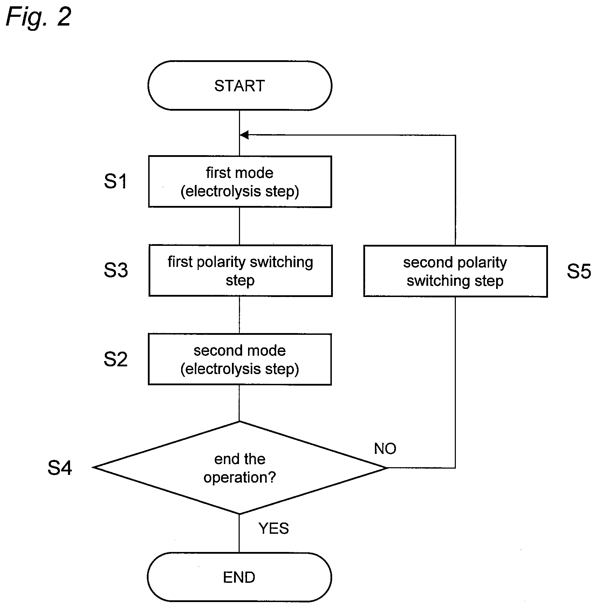

Next, an operation method for the water treatment device 2 will be described. Fig. 2 is a flowchart of the operation method for the water treatment device 2. As shown in Fig. 2, the control device 21 of the first embodiment executes at least two electrolysis steps and a polarity switching step between the consecutive electrolysis steps in the operation method for the water treatment device 2.

In the electrolysis step, the raw water is electrolyzed to produce the treated water. In the polarity switching step, the polarities of the electrodes 50, 51 of the electrolysis device 12 are switched to replace the positive electrode and the negative electrode with each other. The electrolysis step includes a first mode and a second mode that are different from each other, and the control device 21 alternately repeats the first mode and the second mode. The polarity switching step includes a first polarity switching step and a second polarity switching step that are different from each other, and the control device 21 executes the first polarity switching step between the first mode and the second mode and executes the second polarity switching step between the second mode and the first mode.

In order to perform the electrolysis in the first mode (S1) and the second mode (S2), the control device 21 applies a constant current to the electrodes 50, 51 of the electrolysis device 12. Specifically, in the first mode, a positive constant current is applied to the electrode 50 and a negative constant current is applied to the electrode 51, and in the second mode, a negative constant current is applied to the electrode 50 and a positive constant current is applied to the electrode 51. That is, in the first mode and the second mode, the positive and negative of the current applied to each of the electrodes 50, 51 are maintained.

On the other hand, in the first polarity switching step (S3) and the second polarity switching step (S5), in order to switch the polarities of the electrodes 50, 51, the control device 21 reverses the direction of the current applied to the electrodes 50, 51 to invert the positive and negative of a current value. Therefore, the first polarity switching step includes a step of changing the value of the constant current in the first mode (S1) to the value of the constant current in the second mode (S2). Furthermore, the second polarity switching step includes a step of changing the value of the constant current in the second mode to the value of the constant current in the first mode.

In the first embodiment, the control device 21 sequentially executes the first mode (S1), the first polarity switching step (S3), and the second mode (S2). Subsequently, the control device 21 determines whether or not to end the operation (S4). In a case where the operation is not to be ended (No in S4), the control device executes the second polarity switching step (S5) and returns to before step S1, and in a case where the operation is to be ended (Yes in S4), the control device ends the operation. For example, the control device 21 may determine whether or not to end the operation on the basis of the operation time, the amount of the generated treated water, and the instruction input by the user.

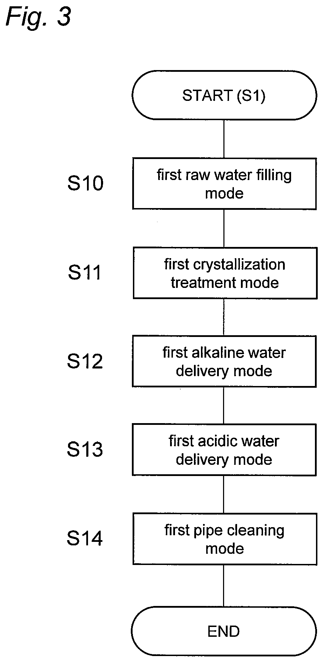

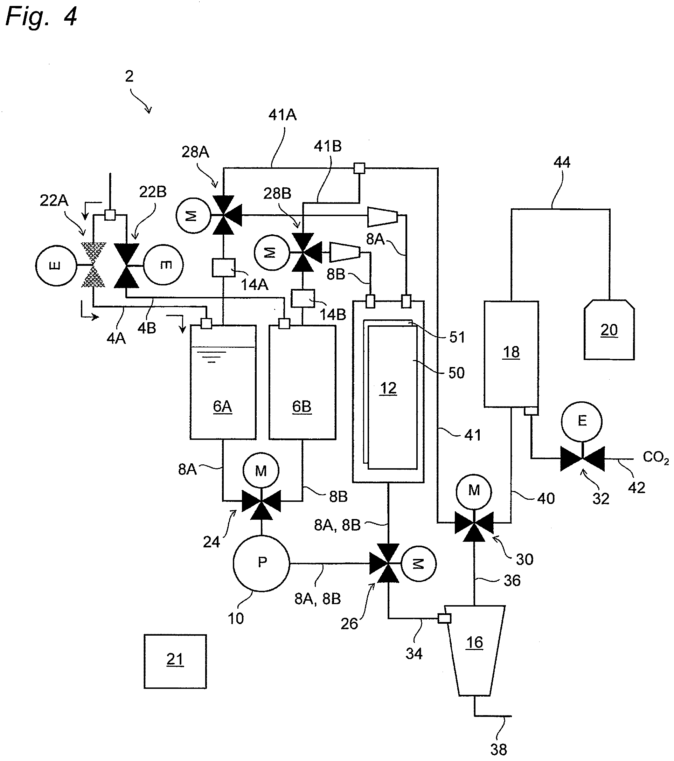

First, the first mode will be described with reference to Figs. 3, 4 to 8. Fig. 3 is a flowchart for the water treatment device 2 executing the first mode. Figs. 4 to 8 are schematic diagrams illustrating a flow of water and the like in a case where the first mode is executed according to the flowchart illustrated in Fig. 3.

### (First raw water filling mode)

As illustrated in Fig. 3, the control device 21 first executes a first raw water filling mode (S10). The first raw water filling mode is a mode in which hard water as raw water is poured into the water treatment device 2 at the time when the operation of the water treatment device 2 is started. Specifically, the control device 21 performs control to generate a flow as illustrated in Fig. 4. In the drawings of Fig. 4 and after, the flow of water is represented by an arrow, and it is assumed that the flow of water is not occurring in a flow path without an arrow. In addition, a state in which the valve is open is indicated by hatching, and a state in which the valve is closed is indicated by solid black.

The control device 21 opens the valve 22A to cause the raw water to pass through the raw water flow path 4A. By passing the raw water through the raw water flow path 4A, the raw water is made to flow through the batch treatment tank 6A through the raw water flow path 4A and stored in the batch treatment tank 6A. At this time, the control device 21 performs control to close the valve 22B.

The control device 21 determines, by using the float sensor 60A (Fig. 1A), whether a predetermined amount (for example, 10 L) of raw water has passed through the batch treatment tank 6A. If it is determined that a predetermined amount of raw water has passed through the batch treatment tank 6A, the control device 21 closes the valve 22A and executes a first crystallization treatment mode (S11).

### (First crystallization treatment mode)

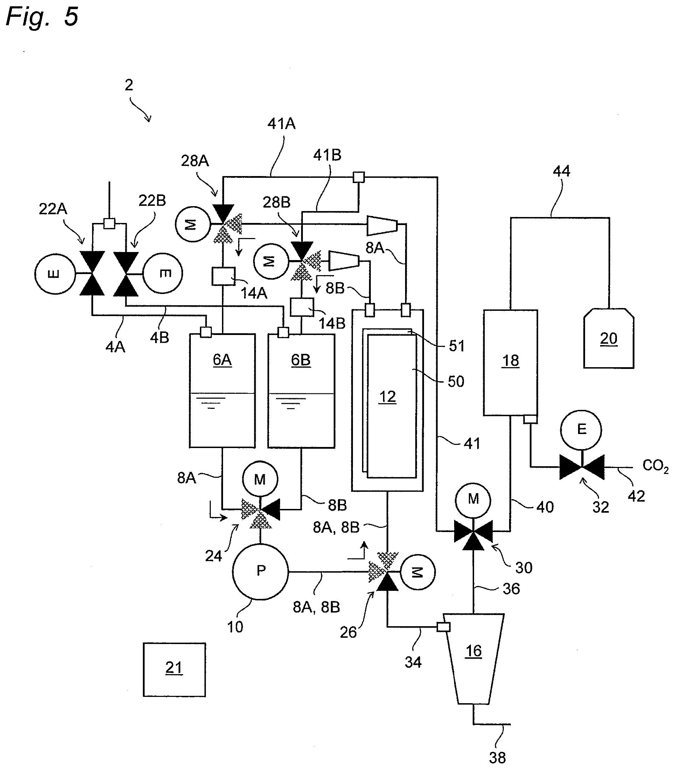

Fig. 5 shows the first crystallization treatment mode. The control device 21 performs control to supply the raw water stored in the batch treatment tank 6A to the electrolysis device 12. Specifically, while driving the pump 10, the control device 21 opens the valve 24 to pass the water from the batch treatment tank 6A to the circulation flow path 8A, and opens the valve 26 to pass the water to the electrolysis device 12. At this time, the control device 21 controls opening and closing of the valve 24 to stop the water from flowing downstream from the batch treatment tank 6B.

The control device 21 further drives the electrolysis device 12 to electrolyze the raw water supplied from the batch treatment tank 6A, thereby generating alkaline water and acidic water.

In the first crystallization treatment mode, the electrolysis device 12 is controlled to cause, among the alkaline water and the acidic water generated by the electrolysis device 12, the alkaline water to pass through the circulation flow path 8A and the acidic water to pass through the circulation flow path 8B.

The control device 21 controls opening and closing of the valve 28A to cause the alkaline water having passed through the circulation flow path 8A to return to the batch treatment tank 6A, and controls opening and closing of the valve 28B to cause the acidic water having passed through the circulation flow path 8B to return to the batch treatment tank 6B. With this configuration, a flow shown by arrows as illustrated in Fig. 5 is generated.

According to the above operation, while the raw water in the batch treatment tank 6A is consumed, about a half of the consumed amount of the alkaline water is newly stored in the batch treatment tank 6A. Therefore, the amount of water stored consequently decreases, and the pH value detected by the pH sensor 14A increases. On the other hand, because the acidic water is being accumulated in the batch treatment tank 6B, the amount of water stored increases, and the pH value detected by the pH sensor 14B is maintained at a low value. In the first embodiment, the generated acidic water may have a pH value of pH 1.0 or more, desirably pH 2.0 or more and pH 4.0 or less.

In the circulation flow path 8A including the batch treatment tank 6A, the electrolysis using the electrolysis device 12 is continuously performed while the mixed water of raw water and alkaline water circulates, and the pH value also continuously increases.

Here, metal ions such as Ca²⁺ and Mg²⁺ contained in the raw water are electrophoresed from the anode (acidic water) to the cathode (alkaline water) through the diaphragm by electrolysis, and thus, the hardness of the acidic water decreases. Meanwhile, also in the alkaline water containing a large amount of OH⁻, the following reactions of Formulas 2 to 4 occur to cause the hardness in water to decrease.

(Formula 2) OH⁻ + HCO₃⁻ → H₂O + CO₃²⁻

(Formula 3) Ca²⁺ + CO₃²⁻ → CaCO₃

(Formula 4) Mg²⁺ + 2OH⁻ → Mg (OH)₂

As shown in Formula 2, OH⁻ contained in the alkaline water reacts with HCO₃⁻ (bicarbonate ion) in water to generate water and CO₃²⁻ (carbonate ion). The CO₃²⁻ generated in the reaction of Formula 2 reacts with Ca²⁺ as in Formula 3 to generate insoluble CaCO₃ (calcium carbonate). As in Formula 4, Mg²⁺ reacts with OH⁻ contained in the alkaline water to generate insoluble Mg(OH)₂ (magnesium hydroxide). As CaCO₃ and Mg(OH)₂ are crystallized and precipitated, the concentration of metal ions in the alkaline water also decreases to cause the hardness of the alkaline water to also decrease. As a result, the hardness of both acidic water and alkaline water decreases.

By continuously supplying the alkaline water to the circulation flow path 8A and circulating the alkaline water, the reactions of the above Formulas 2 to 4 continuously occur to crystallize and precipitate metal ions in the alkaline water, and the hardness of the raw water can be reduced.

Furthermore, on the anode (acidic water) side, besides the basic reaction of the electrolysis of water, as a side reaction, the reaction of the following Formula 5 occurs, which causes the concentration of chloride ions (Cl⁻) in the acidic water to decrease.

(Formula 5) 2Cl⁻ → Cl₂

Therefore, the concentration of chloride ions in the acidic water is lower than the concentration of chloride ions in raw water which is hard water. In addition, the concentration of chloride ions in the acidic water is lower than the concentration of chloride ions in the alkaline water. For example, the concentration of chloride ions in the acidic water is 15% or less of the concentration of chloride ions in the alkaline water.

The control device 21 ends the first crystallization treatment mode at a predetermined timing, and executes the next mode of a first alkaline water delivery mode (S12). For example, the control device 21 may end the first crystallization treatment mode after a lapse of a predetermined time.

### (First alkaline water delivery mode)

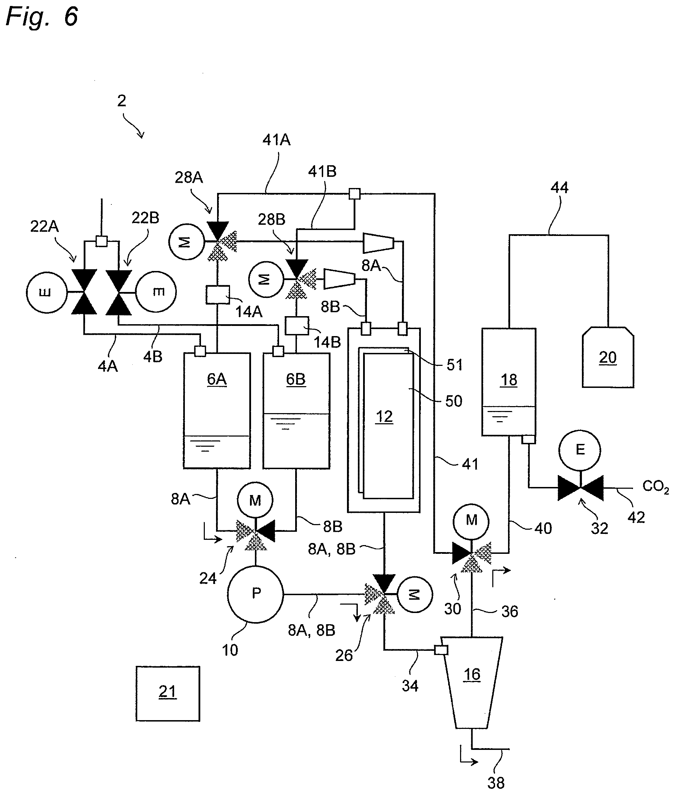

Fig. 6 illustrates the first alkaline water delivery mode. The control device 21 controls the alkaline water stored in the batch treatment tank 6A to be supplied to the intermediate tank 18 via the separation device 16. Specifically, while driving the pump 10, the control device 21 opens the valve 24 to cause the water to pass from the batch treatment tank 6A to the circulation flow path 8A, and opens the valve 26 to cause the water to pass from the circulation flow path 8A to the flow path 34.

The control device 21 operates the separation device 16 to separate the crystals contained in the alkaline water by centrifugal separation. The separation device 16 causes the alkaline water from which the crystals have been separated to pass through the flow path 36, and causes waste water containing the crystals to pass through the flow path 38 to be drained.

The control device 21 opens the valve 30 to cause the alkaline water after crystal separation and having passed through the flow path 36 to pass through the flow path 40. This causes the alkaline water to pass through the flow path 40 to the intermediate tank 18.

In some cases, the alkaline water supplied to the intermediate tank 18 contains crystals of CaCO₃ that could not be separated by the separation device 16. The control device 21 supplies CO₂ as necessary to the intermediate tank 18 by controlling opening and closing of the valve 32 to cause CO₂ to be supplied from the CO₂ supply line 42. This accelerates the reaction of the following Formula 6.

(Formula 6) CaCO₃ + CO₂ + H₂O → Ca (HCO₃)₂

The crystal CaCO₃ reacts with CO₂ and H₂O to generate soluble Ca(HCO₃)₂. The crystals can be dissolved in water by the reaction, and the turbidity of the treated water can be reduced. The reaction formula for Mg²⁺ is omitted.

According to the above operation, while the amount of alkaline water stored in the intermediate tank 18 increases, the amount of alkaline water stored in the batch treatment tank 6A decreases. The control device 21 of the first embodiment continues the first alkaline water delivery mode until the amount of water stored in the batch treatment tank 6A is used up. The control device 21 may determine, by using the float sensor 60A (Fig. 1A), whether or not the entire amount of water stored in the batch treatment tank 6A has been used up. If it is determined that the amount of water stored in the batch treatment tank 6A has been used up, the control device 21 stops the first alkaline water delivery mode and executes the next mode of a first acidic water delivery mode (S13).

### (First acidic water delivery mode)

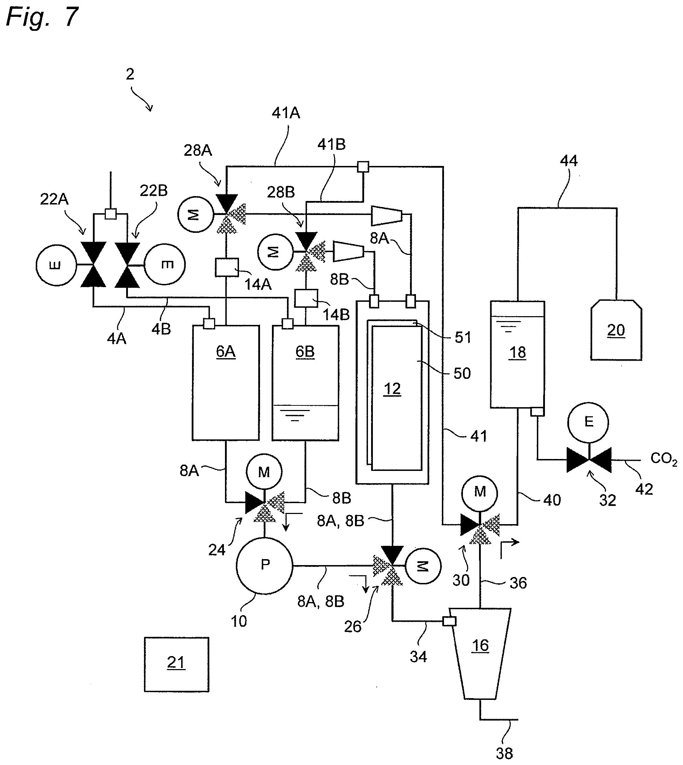

Fig. 7 illustrates the first acidic water delivery mode. The control device 21 controls the acidic water stored in the batch treatment tank 6B to be supplied to the intermediate tank 18 via the separation device 16. While the separation device 16 is operated in the first alkaline water delivery mode described above, the operation of the separation device 16 is stopped in the first acidic water delivery mode.

As illustrated in Fig. 7, while driving the pump 10, the control device 21 opens the valve 24 to cause the water to pass from the batch treatment tank 6B to the circulation flow path 8B, and opens the valve 26 to cause the water to pass from the circulation flow path 8B to the flow path 34.

The control device 21 does not operate the separation device 16, and causes the acidic water reaching the separation device 16 to pass through as it is and to pass through the flow path 36. The control device 21 further opens the valve 30 to cause the acidic water having passed through the flow path 36 to pass through the flow path 40. This causes the acidic water to pass through the flow path 40 to the intermediate tank 18.

Because the alkaline water has already been stored in the intermediate tank 18, the alkaline water and the acidic water are mixed in the intermediate tank 18. The mixed water of alkaline water and acidic water is neutralized, and the pH value becomes a value near neutral. Because the hardness of both the alkaline water and the acidic water is low as described above, the hardness of the mixed water also becomes low. This causes the mixed water stored in the intermediate tank 18 to be generated as soft water having a pH value near neutral and low hardness.

According to the above operation, while the amount of mixed water stored in the intermediate tank 18 increases, the amount of acidic water stored in the batch treatment tank 6B decreases. The control device 21 of the first embodiment continues the first acidic water delivery mode until the amount of acidic water in the batch treatment tank 6B decreases to a predetermined amount (for example, 2 L). The control device 21 may determine whether or not the predetermined amount of water stored in the batch treatment tank 6B has been used up by using the float sensor 60B (Fig. 1A). If it is determined that the amount of water stored in the batch treatment tank 6B has been reduced to the predetermined amount, the control device 21 stops the first acidic water delivery mode and executes the next mode of a first pipe cleaning mode (S14).

### (First pipe cleaning mode)

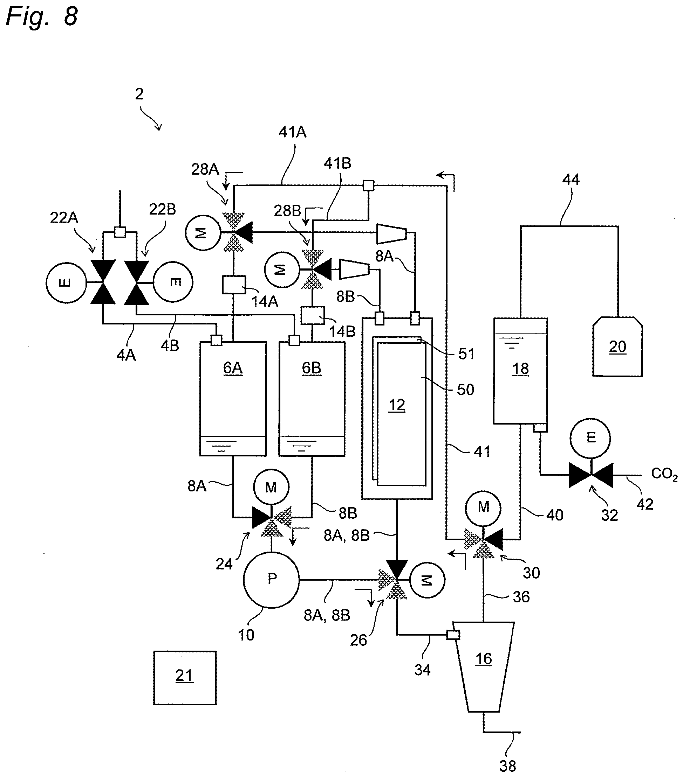

Fig. 8 illustrates the first pipe cleaning mode. The control device 21 controls the acidic water remaining in the batch treatment tank 6B to be returned to the batch treatment tanks 6A, 6B via the separation device 16 and the bypass flow paths 41, 41A, 41B.

Specifically, while driving the pump 10, the control device 21 opens the valve 24 to cause the water to pass from the batch treatment tank 6B to the circulation flow path 8B, and opens the valve 26 to cause the water to pass from the circulation flow path 8B to the flow path 34. The control device 21 does not operate the separation device 16, and causes the acidic water reaching the separation device 16 to pass through as it is and to pass through the flow path 36.

The control device 21 further controls opening and closing of the valve 30 to cause the acidic water having passed through the flow path 36 to pass through the flow path 41 and flow paths 41A, 41B. The control device 21 further controls opening and closing of the valves 28A, 28B to cause the acidic water having passed through the flow paths 41A, 41B to pass through the circulation flow paths 8A, 8B to the batch treatment tanks 6A, 6B.

With this configuration, a flow of the acidic water as illustrated in Fig. 8 is generated. By the acidic water flowing through each pipe, each pipe can be cleaned by causing scale (CaCO₃) attached to the inner wall surface of each pipe to be dissolved in the acidic water.

According to the above operation, the amount of acidic water stored in the batch treatment tank 6A increases, and the amount of acidic water stored in the batch treatment tank 6B decreases. After a predetermined amount (for example, 1 L) of the acidic water in the batch treatment tank 6B has been passed through, the control device 21 ends the first pipe cleaning mode.

Execution of the first mode is completed by executing steps S10 to S14 described above. The acidic water remains in the batch treatment tank 6B. In this state, the first polarity switching step is executed (S3).

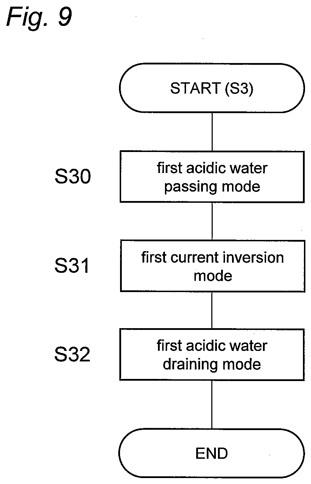

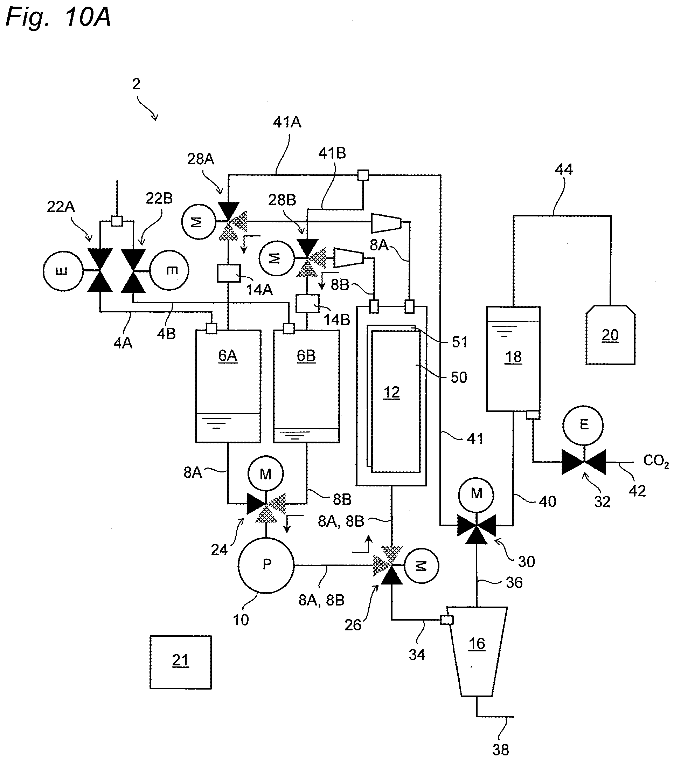

The first polarity switching step will be described with reference to Fig. 9 and Figs. 10A to 10C. Fig. 9 is a flowchart for the water treatment device 2 executing the first polarity switching step. Figs. 10A to 10C are diagrams illustrating a flow of water in the first polarity switching step.

### (First acidic water passing mode)

As illustrated in Fig. 9, the control device 21 first executes a first acidic water passing mode (S30). The first acidic water passing mode is a mode in which acidic water is made to flow in advance to fill the electrolysis device 12 with the acidic water before the polarity of the electrodes 50, 51 is inverted. Specifically, the control device 21 performs control to generate a flow as illustrated in Fig. 10A. The acidic water used in the first acidic water passing mode is the acidic water generated in the first mode.

While driving the pump 10, the control device 21 opens the valve 24 to cause the water to pass from the batch treatment tank 6B to the circulation flow path 8B, and opens the valve 26 to cause the water to pass from the circulation flow path 8B to the electrolysis device 12. The control device 21 does not operate the electrolysis device 12, and causes the acidic water reaching the electrolysis device 12 to pass as it is without being electrolyzed, and causes the acidic water to pass through the circulation flow paths 8A, 8B. The control device 21 further controls opening and closing of the valves 28A, 28B to cause the acidic water discharged from the electrolysis device 12 to pass through the circulation flow paths 8A, 8B to the batch treatment tanks 6A, 6B.

### (First current inversion mode)

When a predetermined time has elapsed since the start of the first acidic water passing mode (S30), the control device 21 executes a first current inversion mode (S31). The first current inversion mode is a mode in which the positive and negative of the current value applied to the electrolysis device 12 are inverted while the acidic water is passed through the electrolysis device 12.

The passage of the acidic water in the first current inversion mode is continuously performed with the passage of the acidic water in the first acidic water passing mode. That is, the control device 21 controls the valves 24, 26 to cause the communication between the batch treatment tank 6B and the electrolysis device 12 to be maintained over the first acidic water passing mode and the first current inversion mode.

In a state of the passage of the acidic water being continued, the control device 21 inverts the positive and negative of the current applied to the electrodes 50, 51 of the electrolysis device 12. The control device 21 inverts the current applied to the electrode 50 from positive to negative, and inverts the current applied to the electrode 51 from negative to positive. With such an operation, the polarity of the electrode 50 is switched from the positive electrode to the negative electrode, and the polarity of the electrode 51 is switched from the negative electrode to the positive electrode.

Because the predetermined time (for example, 5 seconds) has elapsed since the start of the first acidic water passing mode, the control device 21 can execute the first current inversion mode in a state where the acidic water has filled the electrolysis device 12. Therefore, at the timing when the polarity is switched, the electrodes 50, 51 are in contact with the acidic water and are in an environment where the concentration of chloride ions is low. Therefore, the elution of the catalyst layers 50B, 51B of the electrodes 50, 51 can be suppressed.

In addition, the scale attached to the electrodes 50, 51 can be removed by passing the acidic water through the electrolysis device 12.

According to the above operation, the amount of acidic water stored in the batch treatment tank 6A increases, and the amount of acidic water stored in the batch treatment tank 6B decreases. When the acidic water in the batch treatment tank 6B is passed for a predetermined time (for example, 10 seconds), the control device 21 stops the first current inversion mode and executes the next mode of a first acidic water draining mode (S32).

In consideration of the water passing mode to be executed, the control device 21 controls the first acidic water delivery mode (S13) so that the amount of water to be passed in the first acidic water passing mode (S30) and the first current inversion mode (S31) in addition to the first pipe cleaning mode (S14) remains in the batch treatment tank 6B.

### (First acidic water draining mode)

Subsequently, the control device 21 executes the first acidic water draining mode (S32), and performs control to drain the acidic water remaining in the batch treatment tanks 6A, 6B via the separation device 16.

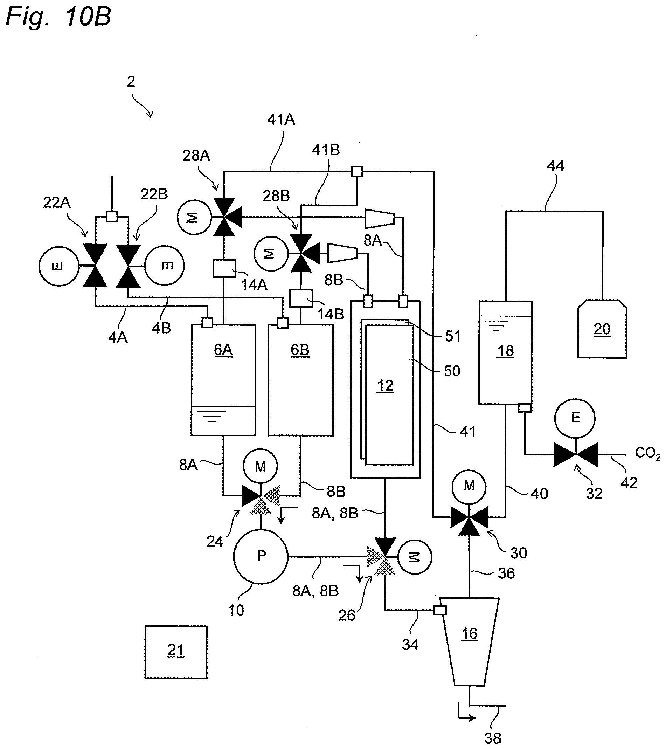

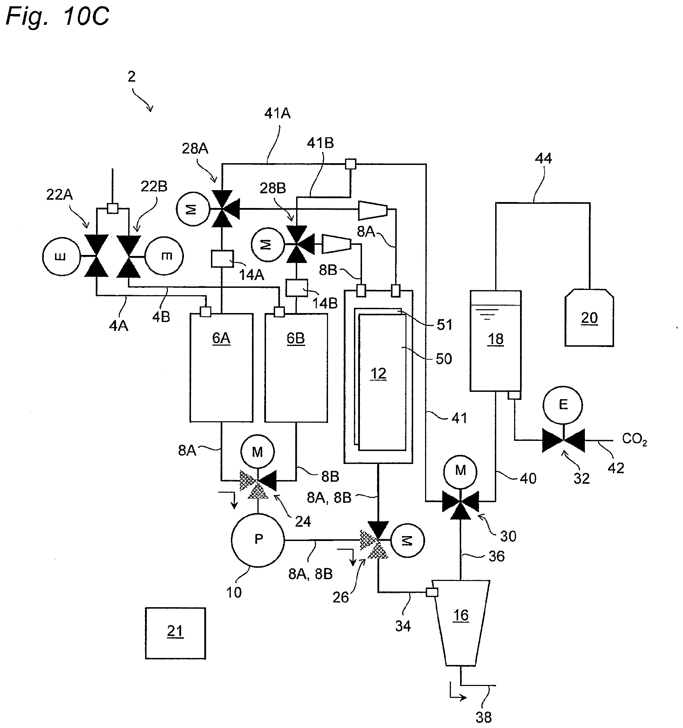

As illustrated in Fig. 10B, while driving the pump 10, the control device 21 opens the valve 24 to cause the water to pass from the batch treatment tank 6B to the circulation flow path 8B, and opens the valve 26 to cause the water to pass from the circulation flow path 8B to the flow path 34. The control device 21 does not operate the separation device 16, and causes the acidic water reaching the separation device 16 to pass through as it is and to pass and drain through the flow path 38. As illustrated in Fig. 10C, when the draining of water from the batch treatment tank 6B is completed, while driving the pump 10, the control device 21 opens the valve 24 to cause the water to pass from the batch treatment tank 6A to the circulation flow path 8A, and opens the valve 26 to cause the water to pass from the circulation flow path 8A to the flow path 34. The control device 21 does not operate the separation device 16, and causes the acidic water reaching the separation device 16 to pass through as it is and to pass and drain through the flow path 38. When the draining of water from the batch treatment tank 6A is completed, the control device 21 stops the first acidic water draining mode. The water may be drained in the order of the batch treatment tank 6A and the batch treatment tank 6B.

Execution of the first polarity switching step (S3) is completed by executing steps S30 to S32 described above. When the polarities of the electrodes 50, 51 are switched, the batch treatment tanks 6A, 6B and the circulation flow paths 8A, 8B in the first mode (S1) are respectively switched.

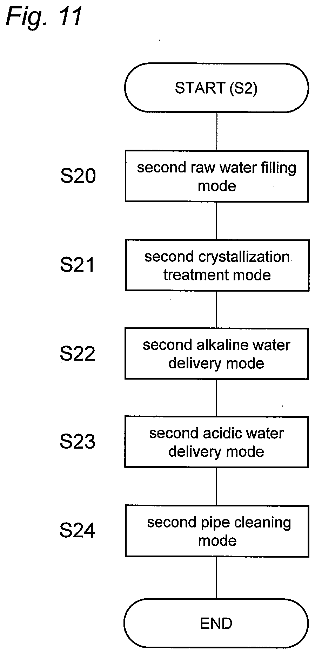

When the polarities of the electrodes 50, 51 are switched, the water treatment device 2 of the first embodiment respectively replaces the batch treatment tanks 6A, 6B and the circulation flow paths 8A, 8B used in the first mode with each other, and executes the second mode as the similar water softening treatment. Specifically, after executing the first mode, the control device 21 executes the second mode according to the flowchart illustrated in Fig. 11.

As illustrated in Fig. 11, in the second mode, the control device 21 sequentially executes a second raw water filling mode (S20), a second crystallization treatment mode (S21), a second alkaline water delivery mode (S22), a second acidic water delivery mode (S23), and a second pipe cleaning mode (S24).

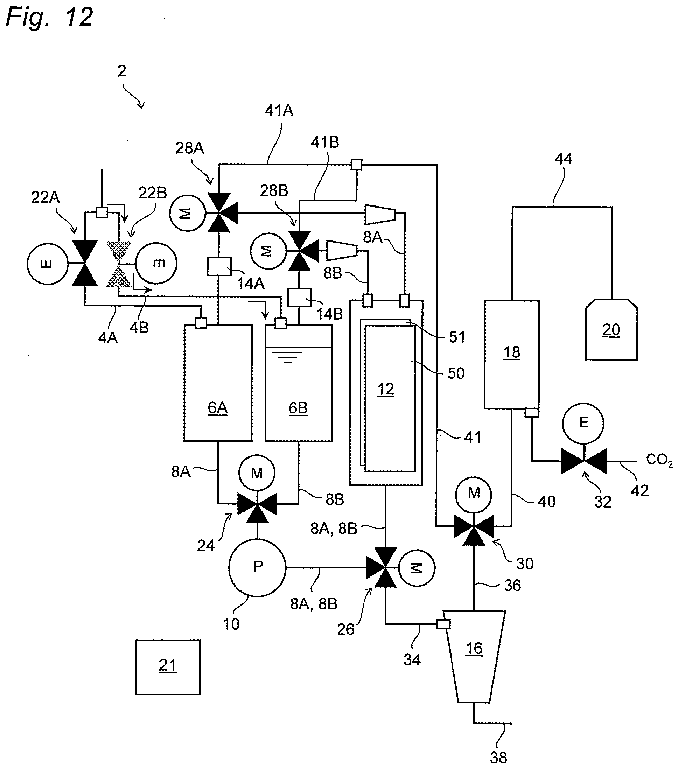

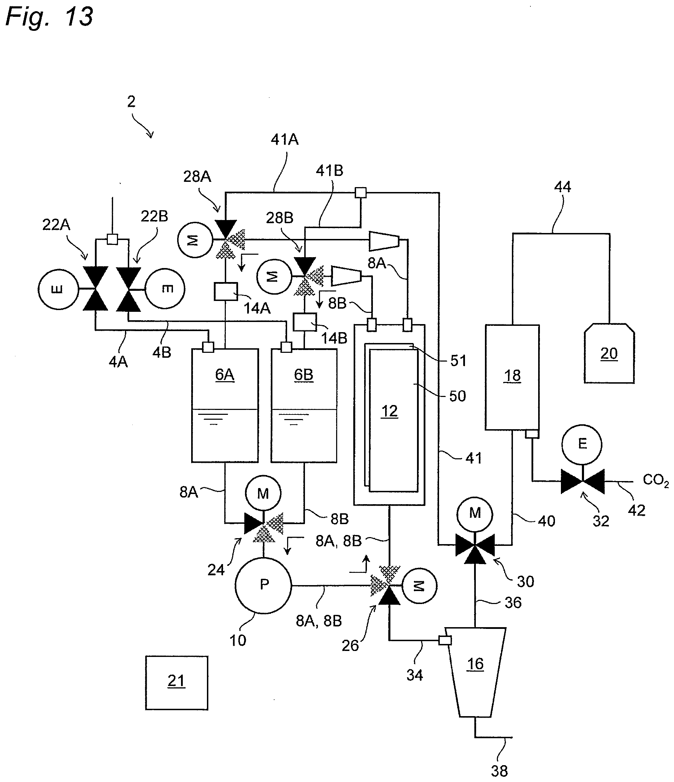

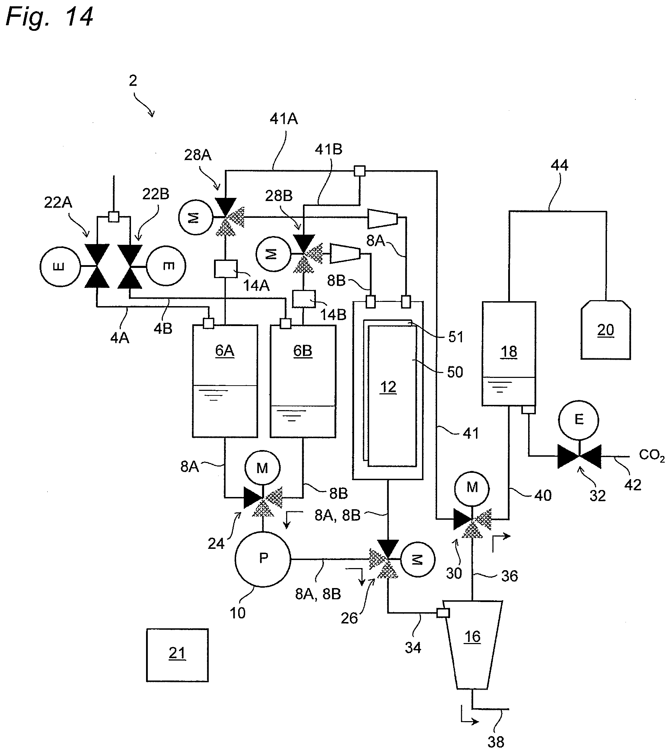

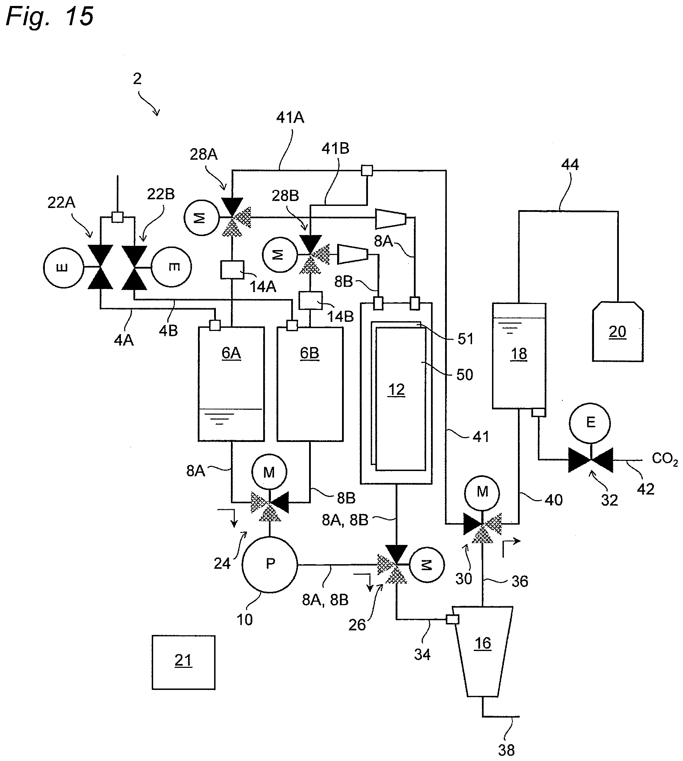

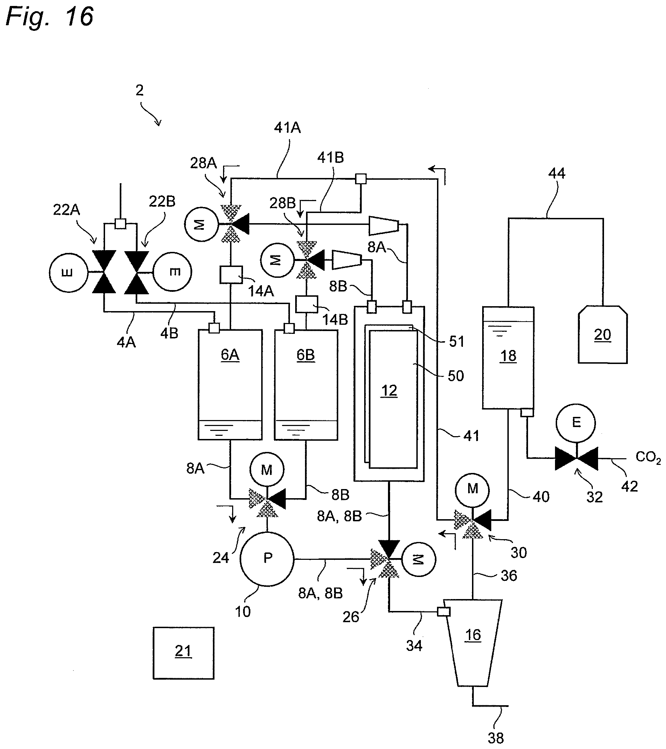

The flow of water in each mode of steps S20 to S24 is represented in Figs. 12 to 16. Fig. 12 illustrates the second raw water filling mode, Fig. 13 illustrates the second crystallization treatment mode, Fig. 14 illustrates the second alkaline water delivery mode, Fig. 15 illustrates the second acidic water delivery mode, and Fig. 16 illustrates the second pipe cleaning mode.

As shown in Figs. 12 to 16, the second mode is different from the first mode only in that the batch treatment tanks 6A, 6B and the circulation flow paths 8A, 8B are respectively replaced with each other.

As illustrated in Fig. 12, in the second raw water filling mode (S20), the raw water is poured into the batch treatment tank 6B. As illustrated in Fig. 13, in the second crystallization treatment mode (S21), the raw water stored in the batch treatment tank 6B is supplied to the electrolysis device 12 to be electrolyzed, the generated alkaline water is passed through the circulation flow path 8B, and while being circulated in the circulation flow path 8B including the batch treatment tank 6B, the acidic water is passed through the circulation flow path 8A to be stored in the batch treatment tank 6A. As illustrated in Fig. 14, in the second alkaline water delivery mode (S22), while the alkaline water stored in the batch treatment tank 6B is supplied to the separation device 16 to have crystals separated, the alkaline water after crystal separation is supplied to the intermediate tank 18. As illustrated in Fig. 15, in the second acidic water delivery mode (S23), the acidic water stored in the batch treatment tank 6A is supplied to the intermediate tank 18 via the separation device 16 and mixed with the alkaline water. As illustrated in Fig. 16, in the second pipe cleaning mode (S24), the acidic water remaining in the batch treatment tank 6A is made to flow to the bypass flow paths 41, 41A, 41B via the separation device 16 to clean the respective pipes.

Similarly to the first mode, in the second crystallization treatment mode (S21) illustrated in Fig. 13, the alkaline water is circulated through the circulation flow path 8B while electrolysis is performed by the electrolysis device 12. With this configuration, the metal components contained in the water can be crystallized while the pH value of the water flowing through the circulation flow path 8B is increased, and the hardness of the raw water can be reduced.

Execution of the second mode is completed by executing steps S20 to S24 described above. The acidic water remains in the batch treatment tank 6A. In this state, the second polarity switching step is executed (S5).

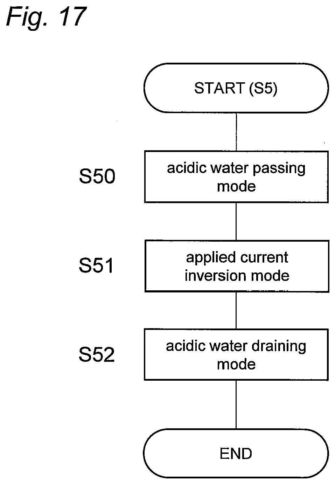

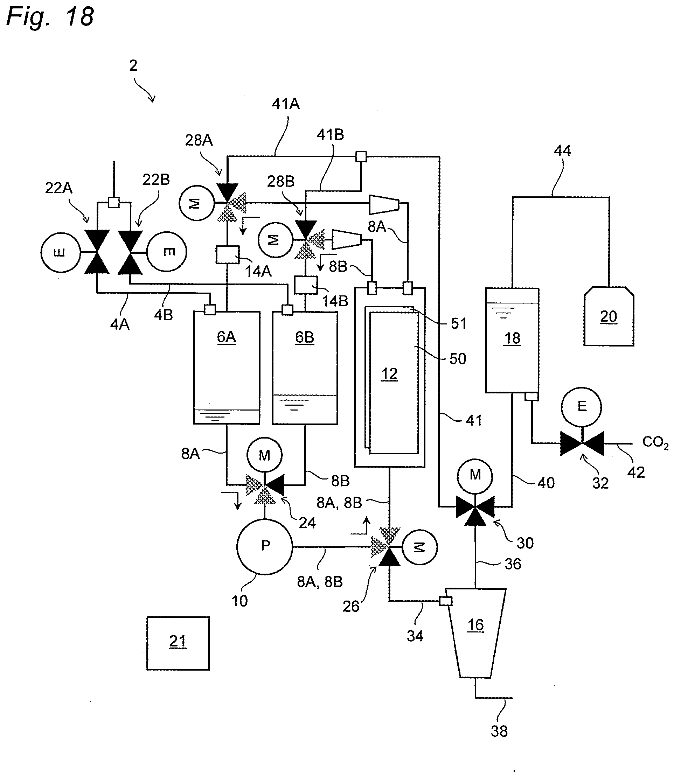

The second polarity switching step of the electrodes 50, 51 will be described with reference to Fig. 17 and Fig. 18. Fig. 17 is a flowchart for the water treatment device 2 executing the second polarity switching step. Fig. 18 is a diagram illustrating a flow of water in a second acidic water passing mode in the second polarity switching step.

As illustrated in Fig. 17, in the second polarity switching step, the control device 21 sequentially executes the second acidic water passing mode (S50), a second current inversion mode (S51), and a second acidic water draining mode (S52).

As illustrated in Fig. 18, the second polarity switching step is different from the first polarity switching step only in that the electrodes 50, 51, the batch treatment tanks 6A, 6B, and the circulation flow paths 8A, 8B are respectively replaced with each other.

In the second acidic water passing mode (S50), the control device 21 causes the acidic water stored in the batch treatment tank 6A to pass through the electrolysis device 12. In the second current inversion mode (S51), the control device 21 inverts the positive and negative of the current value applied to the electrodes 50, 51 of the electrolysis device 12 to invert the positive and negative of the polarity of the electrodes 50, 51 while passing the acidic water. In the second acidic water draining mode (S52), the control device 21 drains the acidic water remaining in the batch treatment tanks 6A, 6B (see Figs. 10B and10C).

Similarly to the first polarity switching step (S3), in the second polarity switching step (S5), the polarities of the electrodes 50, 51 are switched. With this configuration, the batch treatment tanks 6A, 6B and the circulation flow paths 8A, 8B used in the second mode are replaced with each other again, and the first mode is executed.

As illustrated in Fig. 2, the control device 21 alternately executes the first mode (S10 to S14) and the second mode (S20 to S24) with the polarity switching step (S3, S5) interposed therebetween to continuously produce soft water.

### (Summary)

The above description is summarized to describe features of the present disclosure.

In the water treatment device 2 according to the first embodiment, the acidic water is made to flow in the polarity switching step (S3, S5) of the electrodes 50, 51. By the electrolysis reaction of water, the chloride ion concentration of the acidic water is lower than the chloride ion concentrations of the raw water and the alkaline water. Therefore, by passing the acidic water in the polarity switching step, the consumption of the catalyst layers 50B, 51B of the electrodes 50, 51 can be suppressed. Because the chloride ion concentration of the acidic water is lower than the chloride ion concentration of the treated water, the consumption of the catalyst layers 50B, 51B of the electrodes 50, 51 can be further suppressed when compared to the case of passing the treated water. In addition, because the acidic water dissolves the scale attached to the electrodes 50, 51, the life of the electrodes 50, 51 can be further extended by passing the acidic water.

### [Effects]

According to the water treatment device 2 and the operation method for the same according to the first embodiment, the following effects can be obtained.

As described above, the method of the present embodiment is an operation method for the water treatment device 2. The water treatment device 2 includes the electrolysis device 12, the first circulation flow path (circulation flow path 8A), the second circulation flow path (circulation flow path 8B), the water storage tank (intermediate tank 18), and the control device 21. The electrolysis device 12 generates the alkaline water and the acidic water by electrolysis, and includes the electrodes 50, 51 whose polarities can be switched. The circulation flow paths 8A, 8B are each a circulation flow path connected to the electrolysis device 12, and can alternately pass the alkaline water and the acidic water generated by the electrolysis device 12. The intermediate tank 18 stores the treated water generated by the electrolysis device 12. The control device 21 performs at least two electrolysis steps (S1, S2) and the polarity switching step (S3, S5) of switching the polarities of the electrodes 50, 51 of the electrolysis device 12 between the consecutive electrolysis steps. The electrolysis step includes the step (S11, S21) of supplying raw water to the electrolysis device 12. The electrolysis step includes the step (S11, S21) of generating alkaline water and acidic water by electrolysis of the raw water and passing the alkaline water and the acidic water through the circulation flow path 8A or the circulation flow path 8B. The electrolysis step includes the step (S12 to S13, S22 to S23) of delivering the alkaline water and the acidic water that are generated to the intermediate tank 18 and storing the alkaline water and the acidic water as the treated water. In the polarity switching step (S3, S5), the control device 21 performs control to cause the acidic water or the treated water generated by the electrolysis device 12 to pass through the electrolysis device 12 (S30 to S31, S50 to S51).

With such a configuration, the chloride ion concentration of the acidic water generated by electrolysis is lower than the chloride ion concentration of the raw water. Therefore, the control device 21 can switch the polarities of the electrodes 50, 51 in a state where the electrodes 50, 51 are in contact with the acidic water having a low chloride ion concentration. Therefore, the elution of the catalyst layers 50B, 51B can be suppressed, the consumption of the electrodes 50, 51 can be suppressed, and the lives of the electrodes 50, 51 can be extended.

In the method of the present embodiment, in the polarity switching step (S3, S5), the control device 21 performs control to cause the acidic water to pass through the electrolysis device 12.

With such a configuration, the acidic water can dissolve the scale attached to the electrodes 50, 51. Therefore, the lives of the electrodes 50, 51 can be further extended.

In the method of the present embodiment, after causing the acidic water to pass through the electrolysis device 12, the control device 21 performs control to drain the acidic water from the water treatment device 2.

With such a configuration, the raw water supplied in the next electrolysis step can be suppressed from being contaminated by the acidic water containing scale components.

In the method of the present embodiment, the water treatment device 2 further includes the first valve (valves 24, 26, 28 A) that is openable and closable and the second valve (valves 24, 26, 28B) that is openable and closable. The valves 24, 26, 28A are provided in the circulation flow path 8A, and communicate the circulation flow path 8A with the electrolysis device 12 by being opened. The valves 24, 26, 28B are provided in the circulation flow path 8B, and communicate the circulation flow path 8B with the electrolysis device 12 by being opened. In the polarity switching step (S3, S5), the control device 21 performs control to open the valve provided in the flow path through which the acidic water flows, among the valves 24, 26, 28A, 28B.

With such a configuration, the passage of the acidic water can be controlled by opening and closing the valves 24, 26, 28A, 28B. Therefore, the acidic water can be easily passed in accordance with the polarity switching step.

In the method of the present embodiment, in the polarity switching step (S3, S5), the control device 21 inverts the positive and negative of the current applied to the electrodes 50, 51 of the electrolysis device 12 after opening the valves 24, 26, 28A or the valves 24, 26, 28B.

With such a configuration, the positive and negative of the current applied to the electrodes 50, 51 can be inverted in a state where the electrolysis device 12 is being filled with the acidic water having a low chloride ion concentration. Therefore, the electrodes 50, 51 can be prevented from coming into contact with water having a high chloride ion concentration of a degree that promotes the elution of the catalyst layers 50B, 51B.

In the method of the present embodiment, before the polarity switching step (S3, S5), the control device 21 performs control to cause the acidic water to pass through the circulation flow path 8A or the circulation flow path 8B.

With such a configuration, the scale attached to the circulation flow paths 8A, 8B can be dissolved and the pipe can be cleaned in the step of executing the passage of the acidic water (S14, S24), the step being different from the polarity switching step.

The water treatment device 2 of the present embodiment includes the electrolysis device 12, the circulation flow paths 8A, 8B, the water storage tank (intermediate tank 18), and the control device 21. The electrolysis device 12 generates the alkaline water and the acidic water by electrolysis, and includes the electrodes 50, 51 whose polarities can be switched. The circulation flow paths 8A, 8B are each a circulation flow path connected to the electrolysis device 12, and can alternately pass the alkaline water and the acidic water generated by the electrolysis device 12. The intermediate tank 18 stores the alkaline water and the acidic water generated by the electrolysis device 12. The control device 21 performs at least two electrolysis steps (S1, S2) and the polarity switching step (S3, S5) of switching the polarities of the electrodes 50, 51 of the electrolysis device 12 between the consecutive electrolysis steps. In the polarity switching step (S3, S5), the control device 21 performs control to cause the acidic water or the treated water generated by the electrolysis device 12 to pass through the electrolysis device 12 (S30 to S31, S50 to S51).

Therefore, the polarities of the electrodes 50, 51 can be switched in a state where the electrodes 50, 51 are in contact with the acidic water having a low chloride ion concentration. Therefore, the elution of the catalyst layers 50B, 51B can be suppressed, the consumption of the electrodes 50, 51 can be suppressed, and the lives of the electrodes 50, 51 can be extended.

In the water treatment device 2 of the present embodiment, in the polarity switching step (S3, S5), the control device 21 performs control to cause the acidic water to pass through the electrolysis device 12.

With such a configuration, the acidic water can dissolve the scale attached to the electrodes 50, 51. Therefore, the lives of the electrodes 50, 51 can be further extended.

Note that, in the first embodiment, an example in which the operation is ended after the second mode (Yes in S4) has been described, but the present disclosure is not limited thereto. For example, the operation may be ended after the first mode.

Note that, in the first embodiment, an example in which the acidic water generated by the water treatment device 2 is made to flow in the polarity switching step has been described, but the present disclosure is not limited thereto. For example, the acidic water generated by another device or the treated water may be made to flow. In this case, it is desirable that the chloride ion concentration of the acidic water or the treated water is lower than that of the raw water supplied to the water treatment device 2.

Note that, in the first embodiment, an example in which, in the first acidic water passing mode, the acidic water is made to flow through both the circulation flow paths 8A, 8B on the downstream side of the electrolysis device 12 has been described, but the present disclosure is not limited thereto. For example, the acidic water may be made to flow through only one of the circulation flow paths 8A, 8B.

Note that, in the first embodiment, before the polarity switching step (S3, S5), the control device 21 may execute a step of passing the acidic water through the electrolysis device 12 to clean the electrolysis device 12. In this case, in the polarity switching step, the first acidic water passing mode (S30) and the second acidic water passing mode (S50) may not be executed, and the passage of the acidic water and the inversion of the current may be simultaneously started. Even with such a configuration, the electrodes 50, 51 can be suppressed from coming into contact with the water having a high chloride ion concentration.

### (Second Embodiment)

A water treatment device 102 according to a second embodiment of the present disclosure will be described. Note that, in the second embodiment, points different from the first embodiment will be mainly described, and the description overlapping with the first embodiment will be omitted. In the second embodiment, the same or similar configurations as those of the first embodiment are described with the same reference signs.

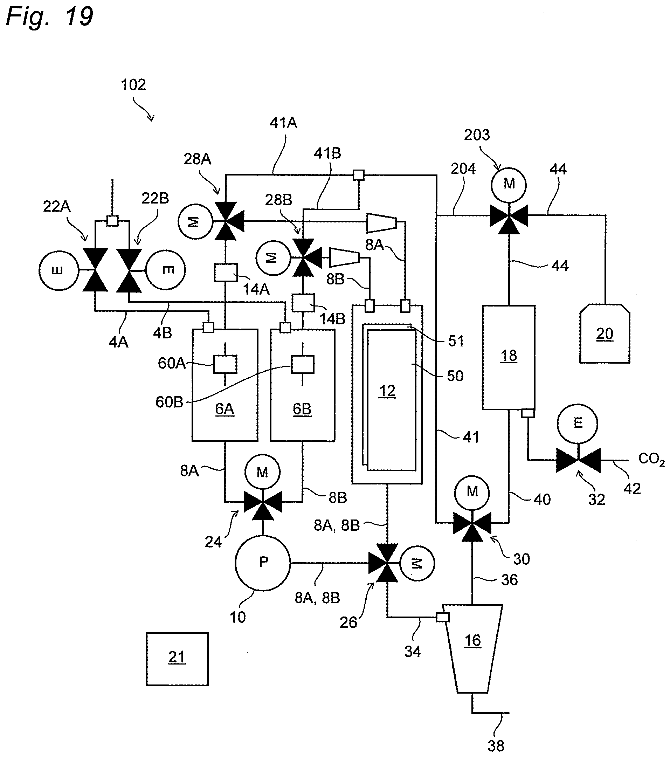

Fig. 19 is a schematic diagram of the water treatment device 102 according to the second embodiment of the present disclosure. As illustrated in Fig. 19, the second embodiment is different from the first embodiment in that the water treatment device 102 includes a valve 203 and a flow path 204 for connection.

The valve 203 is provided in a flow path 44, that is, between an intermediate tank 18 and a water storage tank 20. The valve 203 is connected to a flow path 41 via the flow path 204. In the connection between the flow path 204 and the flow path 41, for example, a valve (not illustrated) that suppresses the flow direction of water toward a valve 30 may be provided. The intermediate tank 18 is connected to batch treatment tanks 6A, 6B and circulation flow paths 8A, 8B, and thus, to an electrolysis device 12, via the flow path 44, the valve 203, the flow path 204, and the flow path 41. With such a configuration, the treated water stored in the intermediate tank 18 can be returned to the batch treatment tanks 6A, 6B.

Through the opening and closing of the valve 203, passing or stopping of water from the intermediate tank 18 to the batch treatment tank 6A or the batch treatment tank 6B are controlled. The valve 203 may be a valve that is opened and closed by motor drive.

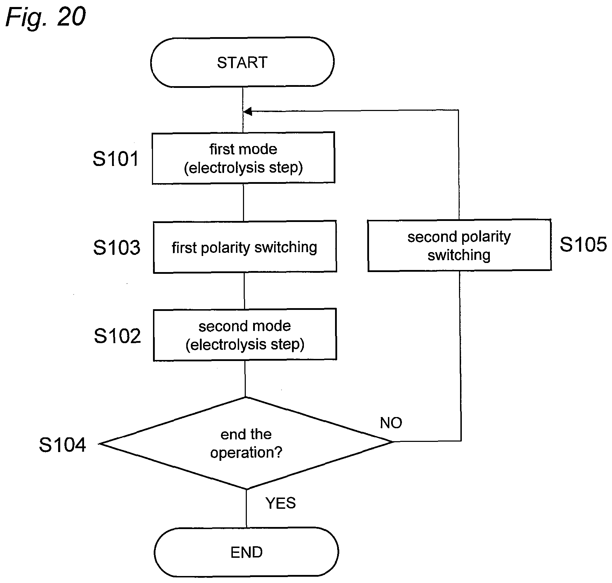

Next, an operation method for the water treatment device 102 will be described. Fig. 20 is a flowchart of the operation method for the water treatment device 102.

As illustrated in Fig. 20, in the operation method for the water treatment device 102, a control device 21 executes steps S101 to S105. A first mode (S101) and a second mode (S102) in the operation method for the water treatment device 102 are common to the first mode (S1) and the second mode (S2) in the first embodiment, respectively. On the other hand, the operation method for the water treatment device 102 is different from the operation method for the water treatment device 2 in the first embodiment in that the treated water is made to flow instead of the acidic water in a polarity switching step (S103, S105).

The control device 21 executes the first mode (S101). After the first mode is ended, the control device 21 drains the acidic water in the batch treatment tanks 6A, 6B and executes the first polarity switching step (S103). Therefore, at the time when the control device 21 starts the first polarity switching step, the batch treatment tanks 6A, 6B are empty.

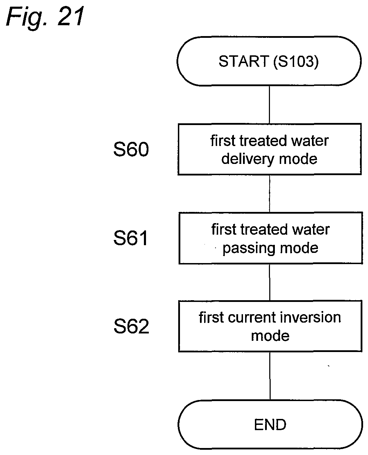

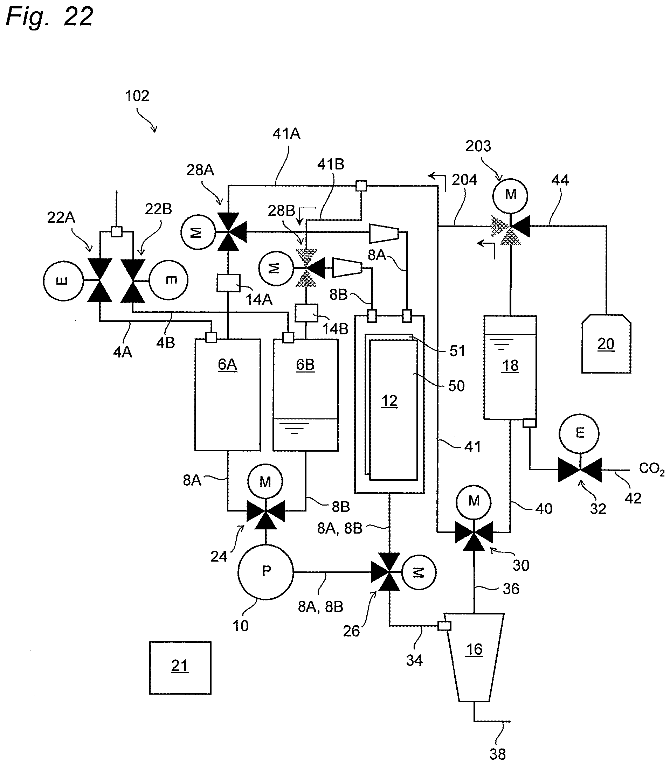

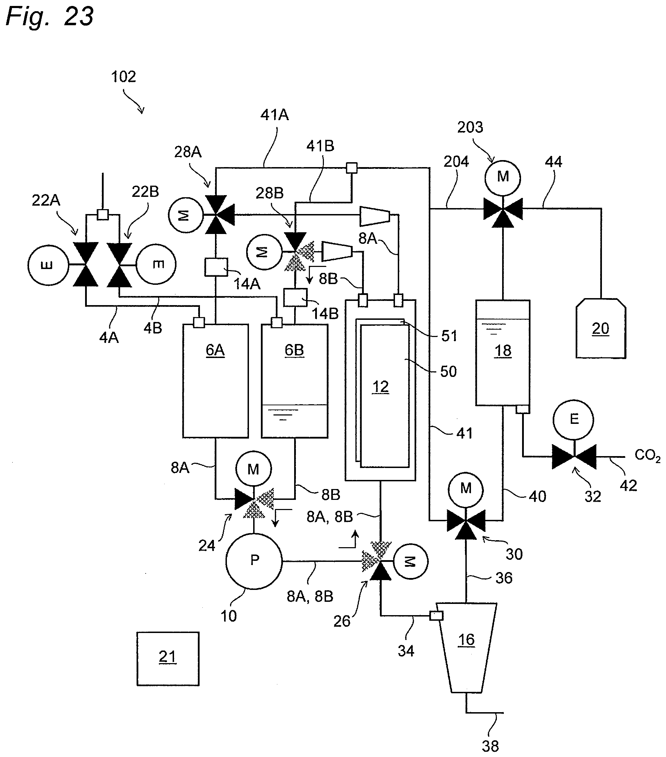

Next, the first polarity switching step will be described with reference to Figs. 21 to 23. Fig. 21 is a flowchart for the water treatment device 102 executing the first polarity switching step. Fig. 22 is a diagram illustrating a flow of water in a first treated water delivery mode in the first polarity switching step. Fig. 23 is a diagram illustrating a flow of water in a first treated water passing mode in the first polarity switching step.

### (First treated water delivery mode)

As illustrated in Fig. 21, the control device 21 first executes the first treated water delivery mode (S60). The first treated water delivery mode is a mode for returning the treated water from the intermediate tank 18 to the batch treatment tank 6B. Specifically, the control device 21 performs control to generate a flow as illustrated in Fig. 22. The treated water used in the first treated water delivery mode is soft water in which the chloride ion concentration generated in the first mode is decreased.

As illustrated in Fig. 22, the control device 21 opens the valve 203 to cause the water to pass from the intermediate tank 18 to the flow path 204, and opens a valve 28B to cause the water to pass from the flow path 41 and a flow path 41B to the batch treatment tank 6B. The treated water is stored in the batch treatment tank 6B. At this time, the control device 21 performs control to close a valve 28A.

### (First treated water passing mode)

When a predetermined time has elapsed since the start of the first treated water delivery mode, the control device 21 executes the first treated water passing mode (S61). The first treated water passing mode is a mode in which the treated water is made to flow in advance to fill the electrolysis device 12 with the acidic water before the polarity of electrodes 50, 51 is inverted. Specifically, the control device 21 performs control to generate a flow as illustrated in Fig. 23.

While driving the pump 10, the control device 21 opens the valve 24 to cause the water to pass from the batch treatment tank 6B to the circulation flow path 8B, and opens the valve 26 to cause the water to pass from the circulation flow path 8B to the electrolysis device 12. The control device 21 does not operate the electrolysis device 12, and causes the treated water reaching the electrolysis device 12 to pass as it is without being electrolyzed, and causes the treated water to pass through the circulation flow path 8B. The control device 21 further controls opening and closing of the valve 28B to cause the treated water discharged from the electrolysis device 12 to pass through the circulation flow path 8B to the batch treatment tank 6B. At this time, the control device 21 performs control to close a valve 28A.

### (First current inversion mode)

When a predetermined time has elapsed since the start of the first acidic water passing mode, the control device 21 executes a first current inversion mode (S62). The first current inversion mode is a mode in which the positive and negative of the current value applied to the electrolysis device 12 are inverted while the treated water is passed through the electrolysis device 12.

The passage of the treated water in the first current inversion mode is continuously performed with the passage of the treated water in the first treated water passing mode. That is, the control device 21 controls the valves 24, 26 to cause the communication between the batch treatment tank 6B and the electrolysis device 12 to be maintained over the first treated water passing mode and the first current inversion mode.

In a state of the passage of the treated water being continued, the control device 21 inverts the positive and negative of the current applied to the electrodes 50, 51 of the electrolysis device 12. The control device 21 inverts the current applied to the electrode 50 from positive to negative, and inverts the current applied to the electrode 51 from negative to positive. With such an operation, the polarity of the electrode 50 is switched from the positive electrode to the negative electrode, and the polarity of the electrode 51 is switched from the negative electrode to the positive electrode.

Because the predetermined time (for example, 5 seconds) has elapsed since the start of the first treated water passing mode, the control device 21 can execute the first current inversion mode in a state where the treated water has filled the electrolysis device 12. Therefore, at the timing when the polarity is switched, the electrodes 50, 51 are in contact with the treated water and are in an environment where the concentration of chloride ions is low. Therefore, the elution of the catalyst layers 50B, 51B of the electrodes 50, 51 can be suppressed.

According to the above operation, the amount of water stored of the treated water in the batch treatment tank 6B is maintained, and the inflow of the treated water into the batch treatment tank 6A can be suppressed. After the treated water of the batch treatment tank 6B is made to flow for a predetermined time (for example, 10 seconds), the control device 21 ends the first current inversion mode.

Execution of the first polarity switching step (S103) is completed by executing steps S60 to S62 described above. At the time when the first polarity switching step is ended, the treated water is already stored in the batch treatment tank 6B. Therefore, in the next electrolysis step, that is, in the second mode (S102), the treated water is already stored in the batch treatment tank 6B to which the raw water is to be supplied. Therefore, the treated water that has been made to flow in the first polarity switching step can be used as the raw water in the second mode.

Subsequently, the control device 21 executes the second mode (S102). After the second mode is ended, the control device 21 drains the acidic water in the batch treatment tanks 6A, 6B and executes the second polarity switching step (S105). Therefore, at the time when the control device 21 starts the second polarity switching step, the batch treatment tanks 6A, 6B are empty.

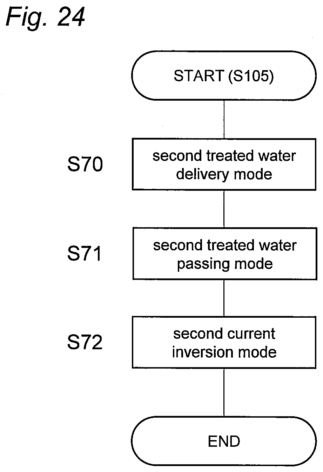

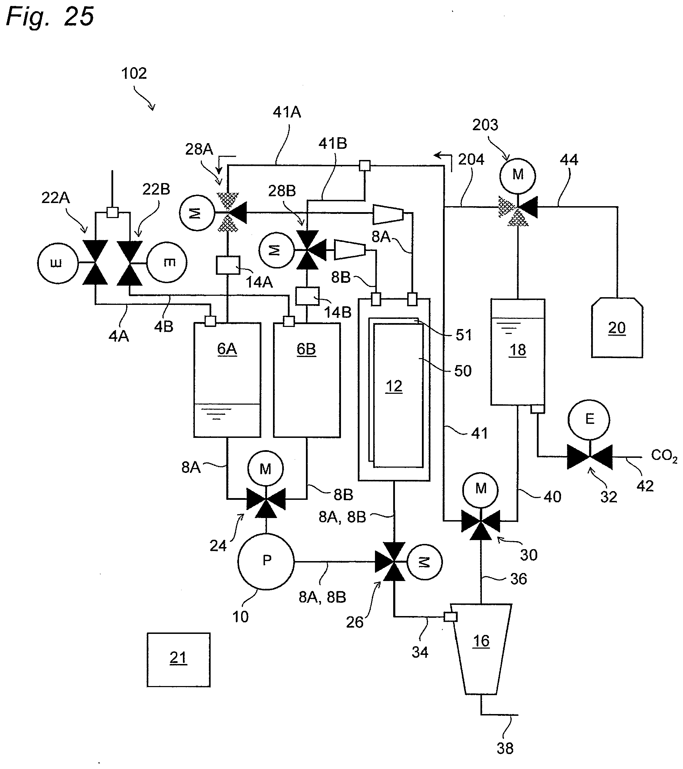

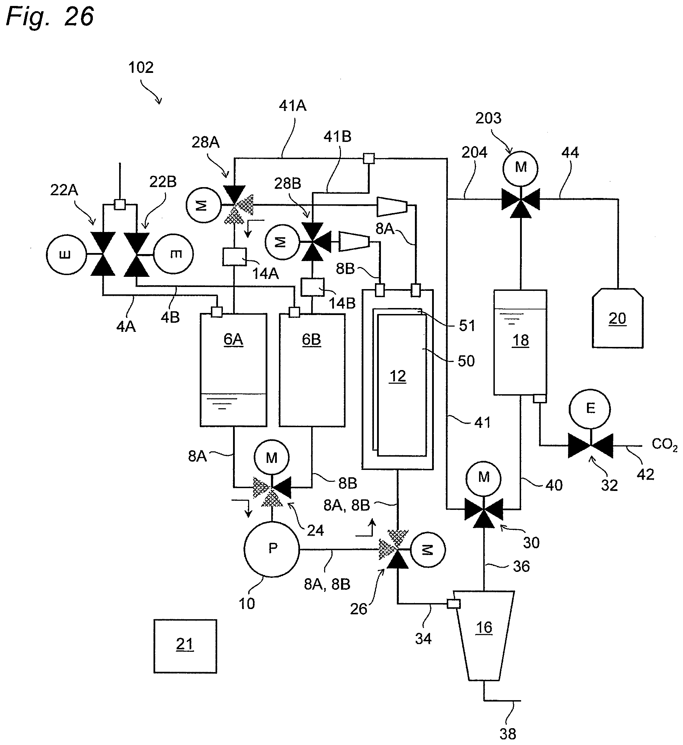

Next, the second polarity switching step will be described with reference to Figs. 24 to 26. Fig. 24 is a flowchart at the time when the water treatment device 102 executes the second polarity switching step. Fig. 25 is a diagram illustrating a flow of water in a second treated water delivery mode in the first polarity switching step. Fig. 26 is a diagram illustrating a flow of water in a second treated water passing mode in the first polarity switching step.

As illustrated in Fig. 24, in the second polarity switching step, the control device 21 sequentially executes the second treated water delivery mode (S70), the second treated water passing mode (S71), and a second current inversion mode (S72).

As illustrated in Figs. 25 and26, the second polarity switching step is different from the first polarity switching step (S103) only in that the electrodes 50, 51, the batch treatment tanks 6A, 6B, and the circulation flow paths 8A, 8B are respectively replaced with each other.

In the second treated water delivery mode (S70), the control device 21 causes the treated water stored in the intermediate tank 18 to be delivered to the batch treatment tank 6A. In the second treated water passing mode (S71), the control device 21 causes the treated water stored in the batch treatment tank 6A to pass through the electrolysis device 12. In the second current inversion mode (S72), the control device 21 inverts the positive and negative of the current value applied to the electrodes 50, 51 of the electrolysis device 12 to invert the polarity of the electrodes 50, 51 while passing the treated water.

Similarly to the first polarity switching step (S103), in the second polarity switching step (S105), the polarities of the electrodes 50, 51 are switched.

At the time when the second current inversion mode is ended, the treated water is already stored in the batch treatment tank 6A. Therefore, in the next electrolysis step, that is, in the first mode (S101), the treated water in the batch treatment tank 6A can be used as the raw water.

### [Effects]

According to the water treatment device 102 and the operation method for the same according to the second embodiment, the following effects can be obtained.

In the method of the present embodiment, in the polarity switching step (S103, S105), the control device 21 performs control to cause the treated water to pass through the electrolysis device 12.

With such a configuration, because the treated water is mixed water of the acidic water and the alkaline water having a low chloride ion concentration, the chloride ion concentration of the treated water is lower than the chloride ion concentration the raw water. Therefore, the control device 21 can switch the polarities of the electrodes 50, 51 in a state where the electrodes 50, 51 are in contact with the treated water having a low chloride ion concentration. Therefore, the elution of the catalyst layers 50B, 51B can be suppressed, the consumption of the electrodes 50, 51 can be suppressed, and the lives of the electrodes 50, 51 can be extended.

In the method of the present embodiment, the water treatment device 102 further includes the first tank (batch treatment tank 6A) provided in the circulation flow path 8A, and the second tank (batch treatment tank 6B) provided in the circulation flow path 8B. In the polarity switching step (S103, S105), the control device 21 performs control to cause the treated water having passed through the electrolysis device 12 to be poured into the tank which is to store the raw water in the next electrolysis step among the batch treatment tank 6A and the batch treatment tank 6B.

With such a configuration, the treated water that has been made to flow in the polarity switching step can be reused in the electrolysis step. Therefore, the amount of soft water that can be generated by the water treatment device 2 increases.

In the method of the present embodiment, the water treatment device 102 further includes the connection flow path (flow path 204) that connects the intermediate tank 18 and the electrolysis device 12, and the openable and closable third valve (valve 203) provided in the flow path 204. In the polarity switching step (S103, S105), the control device 21 performs control to open the valve 203.

With such a configuration, the treated water stored in the intermediate tank 18 can be easily delivered to the electrolysis device 12 through the circulation flow path 8A or the circulation flow path 8B.

In the method of the present embodiment, in the polarity switching step (S103, S105), the control device 21 inverts the positive and negative of the current applied to the electrodes 50, 51 of the electrolysis device 12 after opening the valve 203.

With such a configuration, the positive and negative of the current applied to the electrodes 50, 51 can be inverted in a state where the electrolysis device 12 is filled with the treated water having a low chloride ion concentration.

The water treatment device 102 of the present embodiment further includes the flow path 204 that connects the intermediate tank 18 and the electrolysis device 12, and the openable and closable valve 203 provided in the flow path 204. In the polarity switching step (S103, S105), the control device 21 performs control to open the valve 203.

With such a configuration, the treated water stored in the intermediate tank 18 can be easily delivered to the electrolysis device 12.

Note that the first mode may include a first acidic water cleaning mode in which the acidic water is made to flow through the electrolysis device 12 after a first pipe cleaning mode. Similarly, the second mode may include a second acidic water cleaning mode in which the acidic water is made to flow through the electrolysis device 12 after a second pipe cleaning mode. For example, in the first acidic water cleaning mode, the control device 21 may generate a flow as illustrated in Fig. 10A. **In** the second acidic water cleaning mode, the control device 21 may generate a flow as illustrated in Fig. 18. According to such a mode, the scale attached to the electrodes 50, 51 can be removed also in the operation method in which the treated water is made to flow in the electrode switching step.

The method of a first aspect for a water treatment device including: an electrolysis device that generates alkaline water and acidic water by electrolysis and has an electrode whose polarity can be switched; a first circulation flow path and a second circulation flow path that are circulation flow paths connected to the electrolysis device and are capable of alternately passing the alkaline water and the acidic water generated by the electrolysis device through; a water storage tank that stores treated water generated by the electrolysis device; and a control device, the control device executing at least two electrolysis steps and a polarity switching step of switching the polarity of the electrode of the electrolysis device between the electrolysis steps executed consecutively, wherein the electrolysis step includes the steps of: supplying raw water to the electrolysis device; generating alkaline water and acidic water by electrolysis of raw water and causing the alkaline water and the acidic water to pass through the first circulation flow path or the second circulation flow path; and delivering the alkaline water and the acidic water that are generated to the water storage tank and storing the alkaline water and the acidic water in the water storage tank as treated water, and the control device performs control, in the polarity switching step, to cause the acidic water or the treated water generated by the electrolysis device to pass through the electrolysis device.

The method of a second aspect, depending on the method of the first aspect, wherein, in the polarity switching step, the control device performs control to cause the acidic water to pass through the electrolysis device.

The method of a third aspect, depending on the method of the second aspect, wherein, after causing the acidic water to pass through the electrolysis device, the control device performs control to drain the acidic water from the water treatment device.

The method of a fourth aspect, depending on the method of the second or third aspect, wherein the water treatment device further includes a first valve that is provided in the first circulation flow path and is openable and closable to communicate the first circulation flow path with the electrolysis device by being opened, and a second valve that is provided in the second circulation flow path and is openable and closable to communicate the second circulation flow path with the electrolysis device by being opened, and the control device performs control, in the polarity switching step, to open a valve provided in a flow path through which the acidic water passes, among the first valve and the second valve.

The method of a fifth aspect, depending on the method of the fourth aspect, wherein, in the polarity switching step, the control device inverts positive and negative of current applied to the electrode of the electrolysis device after opening the first valve or the second valve.

The method of a sixth aspect, depending on the method of the first aspect, wherein, in the polarity switching step, the control device performs control to cause the treated water to pass through the electrolysis device.

The method of a seventh aspect, depending on the method of the sixth aspect, wherein the water treatment device further includes a first tank provided in the first circulation flow path and a second tank provided in the second circulation flow path, and the control device performs control, in the polarity switching step, to cause the treated water that has passed through the electrolysis device to be poured into a tank that stores raw water in a next electrolysis step, among the first tank and the second tank.

The method of an eighth aspect, depending on the method of the sixth or seventh aspect, wherein the water treatment device further includes a connection flow path that connects the water storage tank and the electrolysis device, and a third valve that is openable and closable and is provided in the connection flow path, and the control device controls the third valve to open in the polarity switching step.

The method of a ninth aspect, depending on the method of the eighth aspect, wherein, in the polarity switching step, the control device inverts positive and negative of current applied to the electrode of the electrolysis device after opening the third valve.

The method of a tenth aspect, depending on the method of any one of the first to ninth aspects, wherein the control device performs control to cause the acidic water to pass through the first circulation flow path or the second circulation flow path before the polarity switching step.

The water treatment device of an eleventh aspect including: an electrolysis device that generates alkaline water and acidic water by electrolysis and has an electrode whose polarity can be switched; a first circulation flow path and a second circulation flow path that are circulation flow paths connected to the electrolysis device and are capable of alternately passing the alkaline water and the acidic water generated by the electrolysis device through; a water storage tank that stores the alkaline water and the acidic water generated by the electrolysis device as treated water; and a control device, wherein the control device executes at least two electrolysis steps and a polarity switching step of switching the polarity of the electrode of the electrolysis device between the electrolysis steps executed consecutively, and the control device performs control, in the polarity switching step for the electrode, to cause the acidic water or the treated water generated by the electrolysis device to pass through the electrolysis device.

The water treatment device of a twelfth aspect, depending on the water treatment device of the eleventh aspect, wherein, in the polarity switching step, the control device performs control to cause the acidic water to pass through the electrolysis device.

The water treatment device of a thirteenth aspect, depending on the water treatment device of the eleventh aspect, further including: a connection flow path that connects the water storage tank and the electrolysis device; and a third valve that is openable and closable and is provided in the connection flow path, wherein the control device controls the third valve to open in the polarity switching step.

While the present disclosure has been fully described in connection with the preferred embodiments with reference to the accompanying drawings, various changes and modifications will be apparent to those skilled in the art. The above changes and modifications are to be understood as included within the scope of the present disclosure as set forth in the appended claims unless the changes and modifications depart therefrom.

### INDUSTRIAL APPLICABILITY

The water treatment device of the present disclosure is useful as a water softening device.

### REFERENCE SIGNS LIST

2 Water treatment device
4A, 4B Raw water flow path
6A, 6B Batch treatment tank
8A, 8B Circulation flow path
10 Pump
12 Electrolysis device
18 Intermediate tank
20 Water storage tank
22A, 22B Valve
24 Valve
26 Valve
28A, 28B Valve
50 Electrode
51 Electrode
102 Water treatment device
203 Valve
204 Flow path
S1 First mode
S2 Second mode
S3 First polarity switching step
S5 Second polarity switching step

## Claims

1. An operation method for a water treatment device comprising: an electrolysis device that generates alkaline water and acidic water by electrolysis and has an electrode whose polarity can be switched; a first circulation flow path and a second circulation flow path that are circulation flow paths connected to the electrolysis device and are capable of alternately passing the alkaline water and the acidic water generated by the electrolysis device through; a water storage tank that stores treated water generated by the electrolysis device; and a control device,
the control device executing at least two electrolysis steps and a polarity switching step of switching the polarity of the electrode of the electrolysis device between the electrolysis steps executed consecutively,
wherein the electrolysis step includes the steps of:
supplying raw water to the electrolysis device;
generating alkaline water and acidic water by electrolysis of raw water and causing the alkaline water and the acidic water to pass through the first circulation flow path or the second circulation flow path; and
delivering the alkaline water and the acidic water that are generated to the water storage tank and storing the alkaline water and the acidic water in the water storage tank as treated water, and
the control device performs control, in the polarity switching step, to cause the acidic water or the treated water generated by the electrolysis device to pass through the electrolysis device.

2. The method according to claim 1, wherein, in the polarity switching step, the control device performs control to cause the acidic water to pass through the electrolysis device.

3. The method according to claim 2, wherein, after causing the acidic water to pass through the electrolysis device, the control device performs control to drain the acidic water from the water treatment device.

4. The method according to claim 2, wherein
the water treatment device further includes a first valve that is provided in the first circulation flow path and is openable and closable to communicate the first circulation flow path with the electrolysis device by being opened, and a second valve that is provided in the second circulation flow path and is openable and closable to communicate the second circulation flow path with the electrolysis device by being opened, and
the control device performs control, in the polarity switching step, to open a valve provided in a flow path through which the acidic water passes, among the first valve and the second valve.

5. The method according to claim 4, wherein, in the polarity switching step, the control device inverts positive and negative of current applied to the electrode of the electrolysis device after opening the first valve or the second valve.

6. The method according to claim 1, wherein, in the polarity switching step, the control device performs control to cause the treated water to pass through the electrolysis device.

7. The method according to claim 6, wherein
the water treatment device further includes a first tank provided in the first circulation flow path and a second tank provided in the second circulation flow path, and
the control device performs control, in the polarity switching step, to cause the treated water that has passed through the electrolysis device to be poured into a tank that stores raw water in a next electrolysis step, among the first tank and the second tank.

8. The method according to claim 6, wherein
the water treatment device further includes a connection flow path that connects the water storage tank and the electrolysis device, and a third valve that is openable and closable and is provided in the connection flow path, and
the control device controls the third valve to open in the polarity switching step.

9. The method according to claim 8, wherein, in the polarity switching step, the control device inverts positive and negative of current applied to the electrode of the electrolysis device after opening the third valve.

10. The method according to any one of claims 1 to 9, wherein the control device performs control to cause the acidic water to pass through the first circulation flow path or the second circulation flow path before the polarity switching step.

11. A water treatment device comprising:
an electrolysis device that generates alkaline water and acidic water by electrolysis and has an electrode whose polarity can be switched;
a first circulation flow path and a second circulation flow path that are circulation flow paths connected to the electrolysis device and are capable of alternately passing the alkaline water and the acidic water generated by the electrolysis device through;
a water storage tank that stores the alkaline water and the acidic water generated by the electrolysis device as treated water; and
a control device,
wherein the control device executes at least two electrolysis steps and a polarity switching step of switching the polarity of the electrode of the electrolysis device between the electrolysis steps executed consecutively, and
the control device performs control, in the polarity switching step for the electrode, to cause the acidic water or the treated water generated by the electrolysis device to pass through the electrolysis device.

12. The water treatment device according to claim 11, wherein, in the polarity switching step, the control device performs control to cause the acidic water to pass through the electrolysis device.

13. The water treatment device according to claim 11, further comprising:
a connection flow path that connects the water storage tank and the electrolysis device; and
a third valve that is openable and closable and is provided in the connection flow path,
wherein the control device controls the third valve to open in the polarity switching step.
